(19) Europäisches Patentamt
European Patent Office
Office européen des brevets

(11) **EP 3 871 325 B1**

(12) **EUROPÄISCHE PATENTSCHRIFT**

(45) Veröffentlichungstag und Bekanntmachung des Hinweises auf die Patenterteilung:
**13.04.2022 Patentblatt 2022/15**

(21) Anmeldenummer: **19809801.4**

(22) Anmeldetag: **26.11.2019**

(51) Internationale Patentklassifikation (IPC):
**H02K 41/03** (2006.01)  **H02P 5/00** (2016.01)
**H02P 25/064** (2016.01)

(52) Gemeinsame Patentklassifikation (CPC):
**H02K 41/031; H02P 5/00; H02P 25/064;**
**H02K 2201/18**

(86) Internationale Anmeldenummer:
**PCT/EP2019/082515**

(87) Internationale Veröffentlichungsnummer:
**WO 2020/109274 (04.06.2020 Gazette 2020/23)**

(54) **VERFAHREN ZUM ANTREIBEN EINES LÄUFERS EINES PLANARANTRIEBSSYSTEMS**

METHOD FOR DRIVING A ROTOR OF A PLANAR DRIVE SYSTEM

PROCÉDÉ D'ENTRAÎNEMENT D'UN ROTOR D'UN SYSTÈME D'ENTRAÎNEMENT PLANAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.11.2018 DE 102018129731**

(43) Veröffentlichungstag der Anmeldung:
**01.09.2021 Patentblatt 2021/35**

(73) Patentinhaber: **Beckhoff Automation GmbH**
**33415 Verl (DE)**

(72) Erfinder:
• **PENNEKAMP, Hubertus**
**33334 Gütersloh (DE)**
• **LUTHE, Thomas**
**33415 Verl (DE)**
• **WIEDNER, Eva**
**33161 Hövelhof (DE)**
• **WEBER, Tobias**
**33332 Gütersloh (DE)**
• **NEUMANN, Klaus**
**33330 Gütersloh (DE)**
• **WEDDEMANN, Alexander**
**59558 Lippstadt (DE)**

(74) Vertreter: **Patentanwaltskanzlei WILHELM & BECK**
**Prinzenstraße 13**
**80639 München (DE)**

(56) Entgegenhaltungen:
**EP-A1- 3 095 739**  **WO-A1-2013/059934**

• **BOUNINI FARID ET AL: "Modified artificial potential field method for online path planning applications", 2017 IEEE INTELLIGENT VEHICLES SYMPOSIUM (IV), IEEE, 11. Juni 2017 (2017-06-11), Seiten 180-185, XP033133752, DOI: 10.1109/IVS.2017.7995717 [gefunden am 2017-07-28]**
• **WARREN C W ED - INSTITUTE OF ELECTRICAL AND ELECTRONICS ENGINEERS: "MULTIPLE ROBOT PATH COORDINATION USING ARTIFICIAL POTENTIAL FIELDS", PROCEEDINGS OF THE INTERNATIONAL CONFERENCE ON ROBOTICS AND AUTOMATION. CINCINNATI, MAY 13 - 18, 1990; [PROCEEDINGS OF THE INTERNATIONAL CONFERENCE ON ROBOTICS AND AUTOMATION], LOS ALAMITOS, IEEE COMP. SOC. PRESS, US, Bd. -, 13. Mai 1990 (1990-05-13), Seiten 500-505, XP000139899, DOI: 10.1109/ROBOT.1990.126028 ISBN: 978-0-8186-9061-7**
• **Miguel A. Padilla Castaneda ET AL: "Local Autonomous Robot Navigation Using Potential Fields" In: "Motion Planning", 1. Juni 2008 (2008-06-01), InTech, XP055665583, ISBN: 978-953-76-1901-5 DOI: 10.5772/6022, Seite 3 - Seite 4 Seite 8**

**Beschreibung**

Die Erfindung betrifft ein Verfahren zum Antreiben eines Läufers eines Planarantriebssystems. Ferner betrifft die Erfindung eine Steuereinheit zur Durchführung des Verfahrens sowie ein Planarantriebssystem.

Planarantriebssysteme können unter anderem in der Automatisierungstechnik, insbesondere der Fertigungstechnik, der Handhabungstechnik und der Verfahrenstechnik eingesetzt werden. Mittels Planarantriebssystemen kann ein bewegliches Element, ein sogenannter Läufer, einer Anlage einer Maschine in mindestens zwei linear unabhängigen Richtungen bewegt oder positioniert werden. Planarantriebssysteme können einen permanenterregten elektromagnetischen Planarmotor mit einem planaren Stator und einem auf dem Stator in mindestens zwei Richtungen beweglichen Läufer umfassen.

Bei einem permanenterregten elektromagnetischen Planarmotor wird dadurch eine Antriebskraft auf den Läufer ausgeübt, dass stromdurchflossene Leiter ein Antriebsmagnetfeld erzeugen, welches mit einer Magnetanordnung, insbesondere einer Anordnung von Permanentmagneten, des Läufers magnetisch wechselwirken. Die Erfindung betrifft insbesondere Ausgestaltungen von Planarantriebssystemen, bei denen der Läufer ein statisches Magnetfeld aufweist, während die Leiterstreifen dem Stator zugeordnet sind. Das Antriebsmagnetfeld wird also mittels des Stators bereitgestellt.

Aus EP 3 095 739 A1 ist eine gattungsgemäße Vorrichtung und ein gattungsgemäßes Verfahren zum Antreiben wenigstens eines Läufers auf einer Antriebsfläche bekannt, wobei Fahrwege für die Läufer berechnet werden. Die Berechnung erfolgt dabei mittels eines graphenbasierten Algorithmus, beispielsweise mit einem sogenannten A*-Algorithmus oder einem aus dem A*-Algorithmus abgeleiteten Algorithmus. Die Verwendung des A*-Algorithmus stellt hohe Anforderungen an den zur Berechnung bereitgestellten Speicher. Die Anforderungen an die Speicherkapazität steigen mit der Komplexität eines betrachteten Systems. Weiterer Stand der Technik ist aus BOUNINI FARID ET AL: "Modified artificial potential field method for online path planning applications", 2017 IEEE INTELLIGENT VEHICLES SYMPOSIUM (IV), IEEE, 11. Juni 2017, Seiten 180-185, aus der WO 2013/059934 A1, aus WARREN C W ED - INSTITUTE OF ELECTRICAL AND ELECTRONICS ENGINEERS: "MULTIPLE ROBOT PATH COORDINATION USING ARTIFICIAL POTENTIAL FIELDS", PROCEEDINGS OF THE INTERNATIONAL CONFERENCE ON ROBOTICS AND AUTOMATION. CINCINNATI, MAY 13 - 18, 1990; [PROCEEDINGS OF THE INTERNATIONAL CONFERENCE ON ROBOTICS AND AUTOMATION], LOS ALAMITOS, IEEE COMP. SOC.PRESS, US,Bd. -, 13. Mai 1990, Seiten 500-505, und aus Miguel A. Padilla Castaneda ET AL: "Local Autonomous Robot Navigation Using Potential Fields" In: "Motion Planning", 1. Juni 2008 (2008-06-01), InTech, XP055665583, ISBN: 978-953-76-1901-5 D01: 10.5772/6022 bekannt.

Aufgabe der vorliegenden Erfindung ist es, ein einfacheres Verfahren zum Antreiben eines Läufers bereitzustellen, dessen Anforderungen an Rechenaufwand beziehungsweise Speicherplatz reduziert sind. Eine weitere Aufgabe der vorliegenden Erfindung ist die Bereitstellung einer Steuereinheit zur Durchführung des Verfahrens sowie eines planaren Antriebssystems mit einer solchen Steuereinheit. Insbesondere ist es eine Aufgabe der vorliegenden Erfindung, ein Verfahren zum Antreiben eines Läufers bereitzustellen, bei dem eine einfache Berechnung von Bewegungsbahnen beziehungsweise Bewegungsrichtungen des Läufers durchgeführt werden kann.

Die Aufgaben der Erfindung werden durch das Verfahren, die Steuereinheit sowie das Planarantriebssystem der unabhängigen Ansprüche gelöst. Weiterbildungen sind in den abhängigen Ansprüchen angegeben.

In einem Verfahren zum Antreiben wenigstens eines Läufers eines Planarantriebssystems weist der Läufer mindestens eine Vorrichtung zum Erzeugen eines Magnetfeldes auf. Diese Vorrichtung zum Erzeugen eines Magnetfelds kann insbesondere einen Magneten umfassen. Der Läufer ist auf einer Antriebsfläche bewegbar, wobei die Antriebsfläche mittels Statormodulen gebildet ist. Die Statormodule weisen Magnetfelderzeuger, beispielsweise in Form von Leiterstreifen zum Erzeugen von Magnetfeldern auf. Das Verfahren umfasst als ersten Schritt die Ermittlung eines virtuellen zweidimensionalen Potentialverlaufs für den Läufer, wobei ein Zielpunkt des Läufers ein anziehendes Potential innerhalb des virtuellen zweidimensionalen Potentialverlaufs aufweist. In einem zweiten Verfahrensschritt wird ein virtueller Kraftvektor an einer ersten Position des Läufers ermittelt. Der virtuelle Kraftvektor ergibt sich dabei aus dem virtuellen zweidimensionalen Potentialverlauf. Der virtuelle Kraftvektor weist dabei eine Vektorrichtung und eine Vektorlänge auf. In einem dritten Verfahrensschritt wird der Magnetfelderzeuger derart gesteuert, dass ein Antriebsmagnetfeld erzeugt wird, welches mit dem Magnetfeld des Läufers wechselwirkt. Das Antriebsmagnetfeld wird dabei derart erzeugt, dass durch die Wechselwirkung des Antriebsmagnetfeldes mit dem Magnetfeld des Läufers eine resultierende Kraft auf den Läufer wirkt. Eine Richtung der resultierenden Kraft wird anhand der Vektorrichtung eingestellt. Eine Stromstärke der Bestromung wird anhand der Vektorlänge eingestellt.

Wenn der Magnetfelderzeuger in Form von Leiterstreifen ausgeführt ist, erfolgt das Steuern der Erzeugung des Antriebsmagnetfelds mittels einer Steuerung einer Bestromung der Leiterstreifen. Das Steuern der Bestromung umfasst dabei sowohl das Bereitstellen einer Information über eine Stromstärke, mit der eine steuerbare Spannungsquelle eine Stromstärke einstellt als auch das Bereitstellen eines Stromes mit einer bestimmten Stromstärke.

Es kann vorgesehen sein, zur Ermittlung des virtuellen zweidimensionalen Potentialverlaufs unterschiedliche anziehende und abstoßende Potentiale aufzusummieren. Dies kann beispielsweise dadurch erfolgen, dass verschiedenen virtuellen zweidimensionalen Teilpotentialen ein Potentialwert für jeden Ort zugewiesen ist und die Potentialwerte der Teilpotentiale für jeden Ort zur einem Gesamtpotentialwert an diesem Ort addiert werden, wobei die Gesamtpotentialwerte den virtuellen zweidimensionalen Potentialverlauf bilden.

Es kann vorgesehen sein, auch einen virtuellen n-dimensionalen Potentialverlauf zu verwenden, aus dem sich der virtuelle Kraftvektor ergibt. Dabei kann n großer als zwei sein.

Eine Steuereinheit ist ausgebildet, das erfindungsgemäße Verfahren auszuführen. Dazu weist die Steuereinheit insbesondere eine Möglichkeit auf, Daten mit einem Statormodul auszutauschen, wobei das Statormodul die Leiterstreifen zum Erzeugen von Magnetfeldern umfasst. In diesem Fall kann eine zusätzliche Steuerung in den Statormodulen vorgesehen sein, die anhand der von der Steuereinheit bereitgestellten Information über eine Stromstärke die Leiterstreifen eine Steuerung der Bestromung vornimmt.

Ein Planarantriebssystem besteht aus einer solchen Steuereinheit, mehreren Statormodulen und mindestens einem Läufer. Die Statormodule weisen einen Magnetfelderzeuger, beispielsweise in Form von Leiterstreifen, zum Erzeugen des Antriebsmagnetfelds auf. Es sind jedoch auch andere Möglichkeiten an Magnetfelderzeugern innerhalb der Statormodule denkbar.

Ein Computerprogramm umfasst Befehle, die bei der Ausführung des Computerprogramms durch einen Computer diesen veranlassen, das Verfahren auszuführen.

Durch die Ermittlung des virtuellen zweidimensionalen Potentialverlaufs kann für jeden Läufer eine Bewegungsrichtung anhand des virtuellen Kraftvektors, der aufgrund des virtuellen zweidimensionalen Potentialverlaufs ermittelt wird, berechnet werden und so eine Steuerung des Magnetfelderzeugers ausgelöst werden, durch die ein Antriebsmagnetfeld erzeugt wird, mit dem der Läufer möglichst entlang des virtuellen Kraftvektors bewegt wird, sodass eine Bewegung hin zum Zielpunkt erfolgen kann.

In einer Ausführungsform werden Hindernisse auf der Antriebsfläche mittels eines abstoßenden Potentials berücksichtigt, sodass eine Bewegung hin zum Zielpunkt unter Umgehung der Hindernisse erfolgen kann.

In einer Ausführungsform wird die erste Position des Läufers mittels Sensoren innerhalb Statormodule ermittelt. In einer weiteren Ausführungsform wird eine zweite Position des Hindernisses mittels dieser Sensoren ermittelt. Dabei kann vorgesehen sein, dass das Hindernis ein weiterer Läufer ist. Typischerweise weisen Planarantriebssysteme Sensoren zur Ermittlung der Positionen der Läufer auf. Diese ermittelten Positionen können dann bei der Ermittlung des virtuellen zweidimensionalen Potentialverlaufs berücksichtigt werden. Statische Hindernisse können auch aufgrund einer bekannten Position des Hindernisses ohne Positionsbestimmung mittels Sensoren berücksichtigt werden.

Das Verfahren wird zusätzlich für den weiteren Läufer ausgeführt. Der Läufer, für den das Verfahren ursprünglich ausgeführt wird, kann dabei als Hindernis mit einem abstoßenden Potential für den weiteren Läufer aufgefasst werden und bei der Ermittlung des virtuellen Potentialverlaufs für den weiteren Läufer berücksichtigt werden. Dadurch kann das Verfahren auf mehrere Läufer innerhalb eines Planarantriebssystems angewendet werden.

Das abstoßende Potential der Läufer ist unterschiedlich und der Läufer mit einer höheren Priorität weist ein höheres Potential auf. Dadurch wird der Läufer mit der niedrigeren Priorität stärker vom Läufer mit der höheren Priorität abgestoßen als umgekehrt. Dadurch wird beim gleichzeitigen Antreiben mehrerer Läufer der Läufer mit der höheren Priorität stärker auf einer idealen Bahn gehalten als der Läufer mit der niedrigeren Priorität, wobei die ideale Bahn diejenige Bahn ist, die sich ergeben würde, wenn der jeweils andere Läufer nicht vorhanden wäre. Der Läufer mit der niedrigeren Priorität weicht sozusagen dem Läufer mit der höheren Priorität stärker aus als umgekehrt.

In einer Ausführungsform wird das Verfahren nach dem Ablauf einer vorgegebenen Zeitdauer erneut ausgeführt. Insbesondere kann das Verfahren in vorgebbaren Zeitzyklen wiederholt durchgeführt werden. Dadurch kann der Läufer entlang einer in den jeweiligen Verfahrensschritten anhand der virtuellen Kraftvektoren ermittelten Bewegungsbahn hin zum Zielpunkt bewegt werden.

In einer Ausführungsform des Verfahrens wird der Zielpunkt beim erneuten Durchführen der Verfahrensschritte verändert. Dies ist beispielsweise dann vorteilhaft, wenn der Zielpunkt der ursprünglichen Verfahrensschritte ein Zwischenzielpunkt auf dem Weg zu einem endgültigen Zielpunkt war. Dann kann vorgesehen sein, beim Erreichen des Zwischenzielpunktes oder aber auch schon vor Erreichen des Zwischenzielpunktes auf den endgültigen Zielpunkt umzuschwenken. Dadurch werden deutlich komplexere Bewegungsmöglichkeiten realisierbar.

In einer Ausführungsform wird der virtuelle Kraftvektor anhand einer zweidimensionalen Ableitung des virtuellen zweidimensionalen Potentialverlaufs ermittelt. Dies stellt eine einfache mathematische Möglichkeit dar, aus dem virtuellen zweidimensionalen Potentialverlauf einen virtuellen Kraftvektor zu ermitteln. Insbesondere kann ein Gradient des virtuellen zweidimensionalen Potentialverlaufs zur Berechnung genutzt werden.

In einer Ausführungsform weisen die Statormodule jeweils vier Kanten auf. Die Kanten sind dabei entweder Innenkanten oder Außenkanten. An den Innenkanten grenzen weitere plattenförmige Sektoren an, an den Außenkanten nicht. Die Außenkanten weisen jeweils ein abstoßendes Potential auf, welches bei der Ermittlung des virtuellen zweidimensionalen Potentialverlaufs berücksichtigt wird.

Wird die Antriebsfläche aus mehreren Statormodulen aufgebaut, so sollen die Läufer über die Innenkanten, an denen die Statormodule aneinander angrenzen, frei beweglich sein. Die Läufer sollen sich jedoch möglichst nicht in Richtung der Außenkanten, an denen keine weiteren Statormodule angrenzen, bewegen, da sonst die Gefahr besteht, dass die Läufer die Antriebsfläche verlassen. Durch das abstoßende Potential an den Außenkanten kann also eine Bewegung des Läufers von der Antriebsfläche herunter eingeschränkt und idealerweise gänzlich verhindert werden.

In einer Ausführungsform bleiben bei der Ermittlung des virtuellen zweidimensionalen Potentialverlaufs Potentiale unberücksichtigt, die außerhalb eines vorgegebenen Abstands zum Läufer angeordnet sind. Dies ermöglicht die Vereinfachung der Ermittlung des zweidimensionalen Potentialverlaufs und die anschließende Berechnung des virtuellen Kraftvektors, da weiter entfernt liegende, für den aktuellen Bewegungsschritt weniger relevante Potentiale, nicht berücksichtigt werden.

In einer Ausführungsform wird das anziehende Potential des Zielpunkts auch berücksichtigt, wenn der Zielpunkt außerhalb des vorgegebenen Abstands liegt. Dadurch wird ermöglicht, den Läufer derart anzutreiben, dass eine Bewegung in Richtung des Zielpunkts erfolgt, selbst wenn dieser außerhalb des vorgegebenen Abstands liegt.

In einer Ausführungsform wird der Zielpunkt durch einen Zwischenzielpunkt ersetzt, wenn der Zielpunkt weiter vom Läufer entfernt ist als der vorgegebene Abstand. Der Zwischenzielpunkt weist dabei ein anziehendes Potential auf. Sollte der Zielpunkt außerhalb des vorgegebenen Abstands liegen, so wird das anziehende Potential des Zielpunkts bei der Ermittlung des virtuellen Kraftvektors nicht mehr berücksichtigt. In diesem Fall ist es sinnvoll, einen Zwischenzielpunkt zu verwenden, mit dem der Zielpunkt ersetzt wird. Der Zwischenzielpunkt kann dabei in einem Bereich zwischen dem Läufer und dem Zielpunkt angeordnet sein.

In einer Ausführungsform wird bei der Ermittlung des virtuellen zweidimensionalen Potentialverlaufs ein virtuelles Ausgleichspotential derart berücksichtigt, dass zwischen dem Läufer und dem Zielpunkt keine lokalen Potentialminima auf einer Läuferbahn vorliegen. Der Zielpunkt selbst weist also das einzige Potentialminimum in einem Bereich zwischen dem Läufer und dem Zielpunkt auf. Es ist vorteilhaft, lokale Potentialminima auf einer Läuferbahn auszuschließen, da sonst anhand der virtuellen Kraftvektoren eine Bewegung hin zu den lokalen Potentialminima und nicht hin zum Zielpunkt erfolgt. Virtuelle Ausgleichspotentiale können dabei behilflich sein, solche lokalen Potentialminima auf der Läuferbahn auszuschließen und dadurch eine Bewegung hin zum Zielpunkt ermöglichen.

In einer Ausführungsform wird eine Temperatur eines Bereichs eines Statormoduls, insbesondere eine Temperatur eines Statormoduls oder mehrerer Statormodule, bei der Ermittlung des virtuellen zweidimensionalen Potentialverlaufs berücksichtigt. Dabei kann Bereichen der Antriebsfläche ein abstoßendes Potential zugeordnet werden, wobei das abstoßende Potential umso größer ist, je höher die Temperatur im entsprechenden Bereich ausfällt. Zusätzlich können Temperatursensoren vorgesehen sein, mit denen die Temperatur der Bereiche ermittelt wird. Dadurch können Bereiche der Antriebsfläche, die aufgrund einer vorangegangenen Erzeugung einer Antriebskraft erwärmt sind, weniger stark frequentiert werden und dadurch wieder abkühlen.

In einer Ausführungsform wird eine Bewegung eines weiteren Läufers vorausgesagt und eine zukünftige weitere zweite Position des weiteren Läufers nach der Durchführung der Bewegung ebenfalls bei der Ermittlung des virtuellen zweidimensionalen Potentialverlaufs berücksichtigt. Dabei kann es vorgesehen sein, unterschiedliche Positionen des weiteren Läufers anhand einer Gewichtung im virtuellen zweidimensionalen Potentialverlauf zu berücksichtigten, wobei in die Gewichtung die Zeitpunkte des Erreichens der unterschiedlichen Positionen durch den weiteren Läufer einfließen können.

Die Erfindung wird nachfolgend anhand von Ausführungsbeispielen und unter Bezugnahmen auf Figuren näher erläutert. Dabei zeigen jeweils in schematischer Darstellung

Fig. 1 eine Ansicht eines Planarantriebssystems mit einem Statormodul, einer Steuereinheit und einem Läufer;

Fig. 2 eine Ansicht eines weiteren Planarantriebssystems mit sechs nebeneinander angeordneten Statormodulen;

Fig. 3 einen Läufer des in Fig. 1 oder 2 dargestellten Planarantriebssystems mit einer Magnetanordnung;

Fig. 4 eine perspektivische Ansicht eines Statormoduls;

Fig. 5 eine Explosionsansicht eines Sektors des in Fig. 1 oder 2 dargestellten Planarantriebssystems mit einer ersten, zweiten, dritten und vierten Statorlage;

Fig. 6 die in Fig. 5 dargestellten Statorlagen des ersten Sektors der Vorrichtung mit einzelnen Statorsegmenten sowie einer Magnetanordnung eines Läufers;

Fig. 7 einen virtuellen Potentialverlauf mit einem Läufer, einem Zielpunkt und Hindernissen;

Fig. 8 bis 11     virtuelle Potentialverläufe an verschiedenen Schnittlinien des virtuellen Potentialverlaufs der Fig. 7;

Fig. 12     eine Draufsicht auf ein Planarantriebssystem;

Fig. 13     einen weiteren virtuellen Potentialverlauf mit einem Läufer, einem Zielpunkt und Hindernissen; und

Fig. 14     den weiteren virtuellen Potentialverlauf der Fig. 13, nachdem sich der Läufer bewegt hat.

Die Erfindung betrifft im Wesentlichen Weiterentwicklungen der in den Veröffentlichungen WO 2013/059934 A1, WO 2015/017933 A1, WO 2015/179962 A1, WO 2015/184553 A1, WO 2015/188281 A1 und WO 2017/004716 A1 offenbarten Planarantriebssysteme. Außerdem betrifft die Erfindung Weiterentwicklungen der in den deutschen Patentanmeldungen DE 102017131304 A1, DE 102017131314 A1 und DE 102017131321 A1

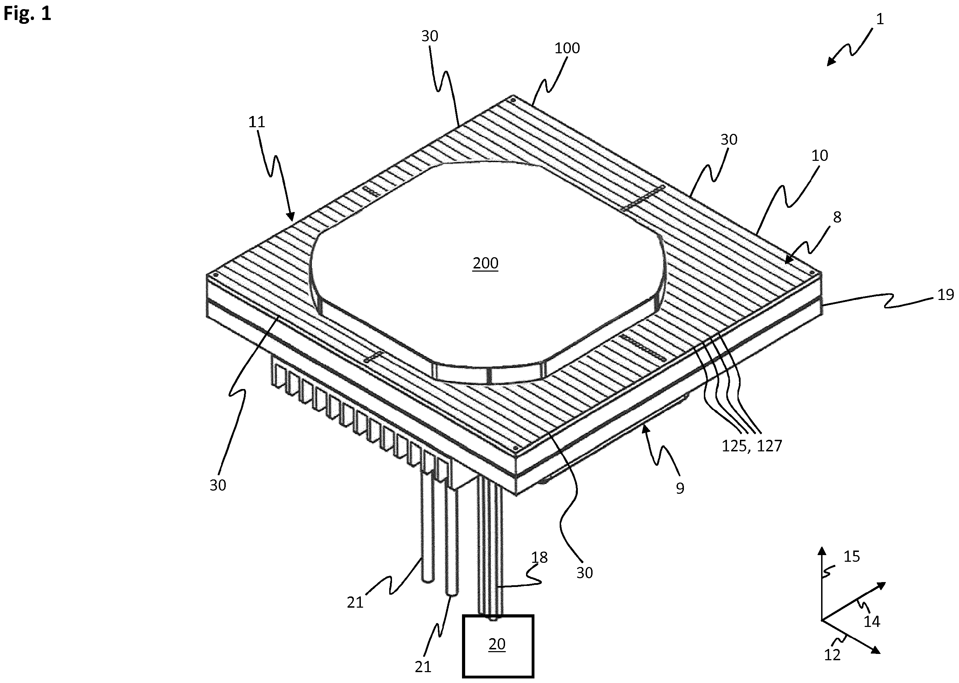

Fig. 1 zeigt ein Planarantriebssystem 1, bestehend aus einem Läufer 200 und einem Statormodul 10. Das Statormodul 10 umfasst ein Modulgehäuse 19 und eine Statoreinheit 100. Das Statormodul 10 weist eine Oberseite 8 und eine der Oberseite 8 gegenüberliegende Unterseite 9 auf. Die Statoreinheit 100 ist in einer von der Unterseite 9 zu der Oberseite 8 orientierten vertikalen Richtung 15 oberhalb des Modulgehäuses 19 und an der Oberseite 8 des Statormoduls 10 angeordnet. Die Statoreinheit 100 ist als ein Planarstator ausgebildet und weist an der Oberseite 8 des Statormoduls 10 eine ebene, d.h. planare, Statorfläche 11 auf. Die Statorfläche 11 bildet zugleich eine Oberfläche des Statormoduls 10.

Die Statorfläche 11 ist senkrecht zu einer vertikalen Richtung 15 orientiert und erstreckt sich über die gesamte Oberseite 8 der Statoreinheit 100 und des Statormoduls 10 entlang der Richtungen 12 und 14. Die Statoreinheit 100 umfasst an der Statorfläche 11 mindestens einen mit einem Antriebsstrom beaufschlagbaren Leiterstreifen 125. Die Statoreinheit 100 kann, wie dargestellt, an der Statorfläche 11 eine Mehrzahl der Leiterstreifen 125 aufweisen. Die Leiterstreifen 125 können von der Steuereinheit 20 jeweils mit einem Antriebsstrom beaufschlagt werden. Mittels der Antriebsströme in den Leiterstreifen 125 kann ein Magnetfeld erzeugt werden, welches den Läufer 200 in Wechselwirkung mit in Fig. 1 nicht dargestellten Magneten des Läufers 200 antreibt. Der Läufer 200 und die Statoreinheit 100 mit den stromdurchflossenen Leiterstreifen 125 bilden einen elektromagnetischen Planarmotor. Die Leiterstreifen 125 bilden Spulenleiter der Statoreinheit 100 und können auch als Spulenleiter bezeichnet werden. Die Leiterstreifen 125 bilden einen Magnetfelderzeuger 127.

Der Läufer 200 ist im Betrieb beweglich über der Statorfläche 11 des Statormoduls 10 angeordnet und kann im Betrieb sowohl in einer ersten Richtung 12, als auch in einer zweiten Richtung 14 angetrieben werden. Die erste Richtung 12 und die zweite Richtung 14 sind linear unabhängig. Insbesondere können die erste Richtung 12 und die zweite Richtung 14, wie in Fig. 1 dargestellt, senkrecht zueinander ausgerichtet sein. Die erste Richtung 12 und die zweite Richtung 14 sind jeweils parallel zu der Statorfläche 11 und senkrecht zu der vertikalen Richtung 15 orientiert. Indem der Läufer 200 zugleich in der ersten Richtung 12, als auch in der zweiten Richtung 14 angetrieben wird, kann der Läufer 200 über der Statorfläche 11 in einer beliebigen Richtung angetrieben werden. Der Läufer 200 kann im Betrieb schwebend über der Statorfläche 11 gehalten werden, beispielsweise durch eine magnetische Wechselwirkung zwischen den Antriebsmagneten und geeigneten Antriebsströmen in den Leiterstreifen 125. Neben einem Antreiben des Läufers 200 in der ersten und/oder zweiten Richtung 12, 14 ist auch ein Antreiben in der dritten, vertikalen Richtung 15 möglich. Zudem kann der Läufer 200 auch um seine Achse gedreht werden.

Die Statorfläche 11 ist rechteckig ausgebildet. Insbesondere kann die Statorfläche 11, wie dargestellt, quadratisch ausgebildet sein. Die Statorfläche 11 wird durch vier jeweils gerade Kanten 30 begrenzt. Jeweils zwei einander gegenüberliegende Kanten 30 sind parallel zu der ersten Richtung 12 und zwei einander gegenüberliegende weitere Kanten 30 sind parallel zu der zweiten Richtung 14 orientiert.

Eine Ausdehnung der Statoreinheit 100 in der vertikalen Richtung 15 ist kleiner als eine Ausdehnung der Statoreinheit 100 in der ersten und der zweiten Richtung 12, 14. Die Statoreinheit 100 bildet daher einen flachen in der ersten und zweiten Richtung 12, 14 ausgedehnten Quader oder eine in der ersten und zweiten Richtung 12, 14 ausgedehnte Platte.

An der Unterseite 9 des Statormoduls 10 oder an der Unterseite des Modulgehäuses 19 können weitere Komponenten an dem Modulgehäuse 19 oder dem Statormodul 10 angeordnet sein. Diese weiteren Komponenten reichen in der ersten Richtung 12 oder in der zweiten Richtung 14 höchstens bis an die Kanten 30 der Statoreinheit 100, so dass die weiteren Komponenten die Kanten 30 der Statoreinheit 100 in der ersten oder der zweiten Richtung 12, 14 nicht überragen.

An der Unterseite des Modulgehäuses 19 sind in Fig. 1 nicht dargestellte Anschlüsse angeordnet zur Verbindung des Statormoduls 10 mit mehreren Anschlussleitungen 18, 21. Die Anschlussleitungen 18, 21 können beispielsweise eine Datenanschlussleitung 18 eines Datennetzwerks und eine Energieversorgungsleitung 21 zur Versorgung des Statormoduls 10 mit elektrischer Energie umfassen. Die Steuereinheit 20 ist mit der Datenanschlussleitung 18 verbunden. Insbesondere kann dem Statormodul 10 über die Energieversorgungsleitung 21 elektrische Energie zur Erzeugung der Antriebsströme zugeführt werden. Die Steuereinheit 20 kann zum Ansteuern der Antriebsströme in den Leiterstreifen 125 eingerichtet sein. Dies bedeutet insbesondere, dass anhand eines durch die Steuereinheit 20 bereitgestellten Steuersignals, welches mittels der Datenanschlussleitung 18 an das Statormodul 10 übergeben wird, innerhalb des Statormoduls 10 die Leiterstreifen 125 der Statoreinheit 100 mit einem durch das Steuersignal definierten Strom beaufschlagt werden.

Die Statorfläche 11 kann in der ersten Richtung 12 eine Ausdehnung zwischen 100mm und 500mm aufweisen, insbesondere zwischen 120mm und 350mm, insbesondere von 240mm. Die Statorfläche 11 kann in der zweiten Richtung 12 eine Ausdehnung zwischen 100mm und 500mm, insbesondere zwischen 120mm und 350mm, insbesondere von 240mm aufweisen. Das Statormodul 10 kann in der vertikalen Richtung 15 eine Ausdehnung zwischen 10mm und 100mm, insbesondere zwischen 15mm und 60mm, insbesondere von 30mm aufweisen. Das Modulgehäuse 19 kann in der vertikalen Richtung 15 eine Ausdehnung zwischen 8mm und 80mm, insbesondere zwischen 13mm und 55mm, insbesondere von 26,6mm aufweisen. Das Modulgehäuse 19 kann in der ersten und/oder zweiten Richtung 12, 14 die gleiche Ausdehnung aufweisen wie die Statorfläche 11.

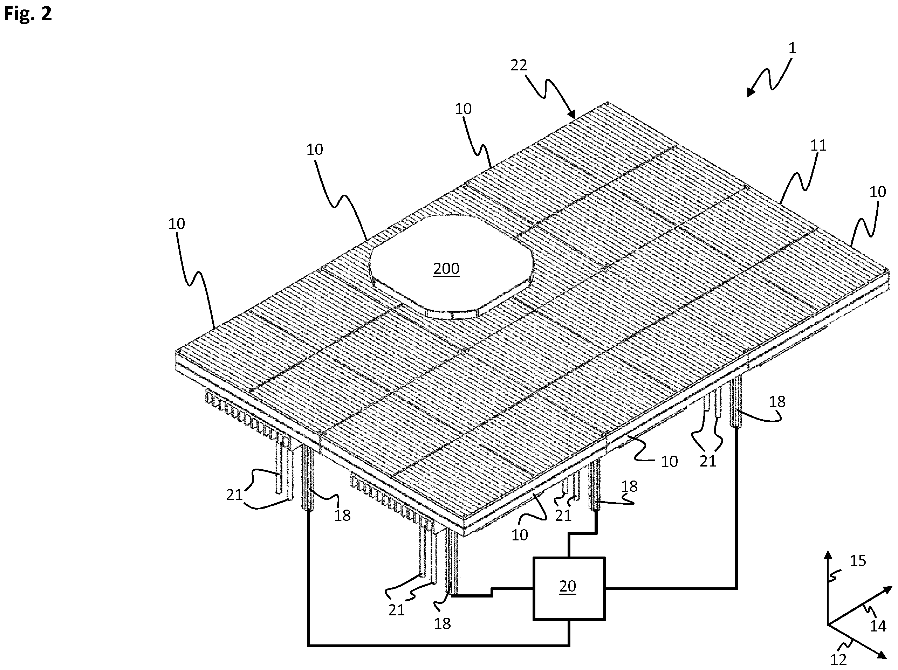

Mehrere Exemplare des Statormoduls 10 können derart nebeneinander angeordnet werden, dass die Kanten 30 benachbarter Statormodule 10 aneinander liegen und die Statorflächen 11 der Statormodule 10 eine zusammenhängende Antriebsfläche 22 bilden, über die der Läufer 200 unterbrechungsfrei bewegt werden kann, wie in Fig. 2 dargestellt ist. Da die Seitenflächen des Statormoduls 10 an den Kanten 30 bündig mit der Statorfläche 11 abschließen, können die Statorflächen 11 von zwei nebeneinander angeordneten Statormodulen 10 nahezu nahtlos aneinander anschließend angeordnet werden, indem die Statormodule 10 mit aneinander liegenden Seitenflächen der Statoreinheiten 100 oder aneinanderlegenden Kanten 30 der Statorflächen 11 angeordnet werden.

Benachbarte Statormodule 10 sind jeweils derart aneinander anschließend angeordnet, dass die Kanten 30 der Statorflächen 11 benachbarter Statormodule 10 aneinander liegen. Dadurch bilden die Statorflächen 11 der Statormodule 10 eine zusammenhängende, planare Antriebsfläche 22 für den Läufer 200. Der Läufer 200 kann nahtlos von der Statorfläche 11 eines der Statormodule 10 auf die oder über die Statorfläche 11 des benachbarten Statormoduls 10 bewegt werden. Jedem der Statormodule 10 können über jeweils eigene Anschlussleitungen 18, 21 Steuersignale und/oder Energie zugeführt werden. Die Datenanschlussleitungen 18 aller Statormodule sind mit einer Steuereinheit 20 verbunden. Die Steuereinheit 20 ist dabei eingerichtet, die Bestromung der Statormodule 10 zu steuern wie in der Beschreibung der Fig. 1 erklärt.

Alternative, hier nicht dargestellte, Ausführungsformen der Statormodule 10 können auch elektrische Verbindungselemente aufweisen, mittels derer Steuersignale und/oder elektrische Energie von einem Statormodul 10 zum benachbarten Statormodul 10 übertragen werden kann. Derartige Verbindungselemente können beispielsweise an den Seitenflächen der Statormodule 10 angeordnet sein. Die Verbindungselemente können als Steckverbinder oder als aneinander anordbare Kontaktflächen ausgebildet sein.

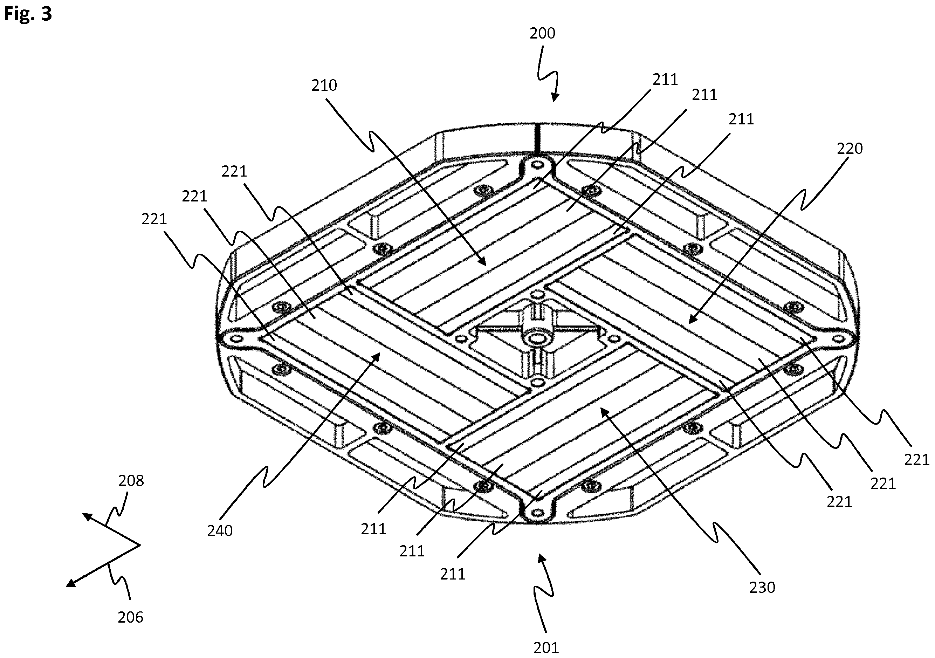

Fig. 3 zeigt den Läufer 200 des Planarantriebssystems der Fig. 1 und 2 in einer Ansicht von unten auf eine Unterseite des Läufers 200. Der Läufer 200 weist an der Unterseite eine Magnetanordnung 201 auf. Die Magnetanordnung 201 ist rechteckig, insbesondere quadratisch, ausgebildet und umfasst mehrere Magneten. Die Unterseite des Läufers 200 ist, insbesondere im Bereich der Magneten der Magnetanordnung 201, eben bzw. planar ausgebildet. Im Betrieb ist die Unterseite des Läufers 200 mit der Magnetanordnung 201 im Wesentlichen parallel zu der Statorfläche 11 orientiert und der Statorfläche 11 zugewandt angeordnet.

Die Magnetanordnung 201 umfasst eine erste Magneteinheit 210, eine zweite Magneteinheit 220, eine dritte Magneteinheit 230 und eine vierte Magneteinheit 240. Die erste Magneteinheit 210 und die dritte Magneteinheit 230 weisen jeweils in einer ersten Läuferrichtung 206 länglich ausgedehnte und entlang einer zu der ersten Läuferrichtung 206 senkrecht orientierten zweiten Läuferrichtung 208 nebeneinander angeordnete Antriebsmagnete 211 auf. Insbesondere können die erste und die dritte Magneteinheit 210, 230 jeweils drei Antriebsmagnete 211 aufweisen. Die zweite Magneteinheit 220 und die vierte Magneteinheit 240 weisen jeweils in der ersten Läuferrichtung 206 nebeneinander angeordnete und entlang der zweiten Läuferrichtung 208 länglich ausgedehnte weitere Antriebsmagnete 221 auf. Die erste und dritte Magneteinheit 210, 230 dient im Betrieb einem Antreiben des Läufers 200 in der zweiten Läuferrichtung 208 und die zweite und vierte Magneteinheit 220, 240 dient im Betrieb einem Antreiben des Läufers 200 in der ersten Läuferrichtung 206. Die Antriebsmagneten 211 der ersten und dritten Magneteinheit 210, 230 und die weiteren Antriebsmagneten 221 der zweiten und vierten Magneteinheit 220, 240 sind jeweils senkrecht zu der ersten und der zweiten Läuferrichtung 206, 208 magnetisiert.

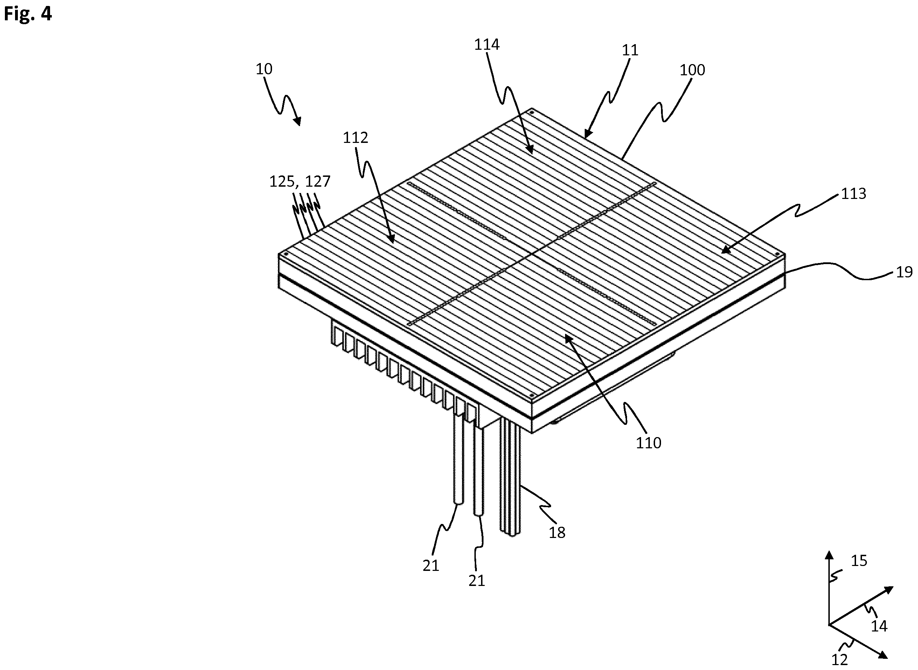

Fig. 4 zeigt das Statormodul 10 des Planarantriebssystems 1 in einer perspektivischen Ansicht ohne den Läufer 200. Die Statoreinheit 100 des Statormoduls 10 umfasst einen ersten Statorsektor 110, einen zweiten Statorsektor 112, einen dritten Statorsektor 113 und einen vierten Statorsektor 114. Die Statorsektoren 110, 112, 113, 114 umfassen ihrerseits jeweils einen Teil der an der Statorfläche 11 der Statoreinheit 100 angeordneten Leiterstreifen 125. Jeder der Leiterstreifen 125 an der Statorfläche 11 ist vollständig in einem der Statorsektoren 110, 112, 113, 114 angeordnet. Die Statorsektoren 110, 112, 113, 114 sind rechteckig ausgebildet. Insbesondere können die Statorsektoren 110, 112, 113, 114 quadratisch ausgebildet sein, so dass eine Ausdehnung der Statorsektoren 110, 112, 113, 114 in der ersten Richtung 12 einer Ausdehnung der Statorsektoren 110, 112, 113, 114 in der zweiten Richtung 14 entspricht.

Die Statorsektoren 110, 112, 113, 114 umfassen jeweils ein Viertel der Fläche, d.h. einen Quadranten, der Statoreinheit 100.

Innerhalb der Statorsektoren 110, 112, 113, 114 sind die Leiterstreifen 125 in mehreren übereinanderliegenden Statorlagen oder Statorebenen angeordnet, wobei jede der Statorlagen lediglich Leiterstreifen 125 umfasst, die entweder im Wesentlichen entlang der ersten Richtung 12 oder im Wesentlichen entlang der zweiten Richtung 14 länglich ausgedehnt sind. Von der Ausdehnung der Leiterstreifen 125 abgesehen und soweit im Folgenden keine Unterschiede beschrieben werden, sind die Statorsektoren 110, 112, 113, 114 auf den unterschiedlichen Statorlagen identisch ausgebildet. Bei der in Fig. 4 dargestellten Statoreinheit 100 des Statormoduls 10 umfasst die Statorlage an der Statorfläche 11 lediglich Leiterstreifen 125, welche entlang der ersten Richtung 12 länglich ausgedehnt und entlang der zweiten Richtung 14 nebeneinander und aneinander anschließend angeordnet sind.

Die in Fig. 4 sichtbare Statorlage an der Statorfläche 11 bildet eine erste Statorlage der Statoreinheit 100. In der vertikalen Richtung 15 unterhalb der ersten Statorlage umfasst die Statoreinheit 100 mindestens noch eine zweite Statorlage.

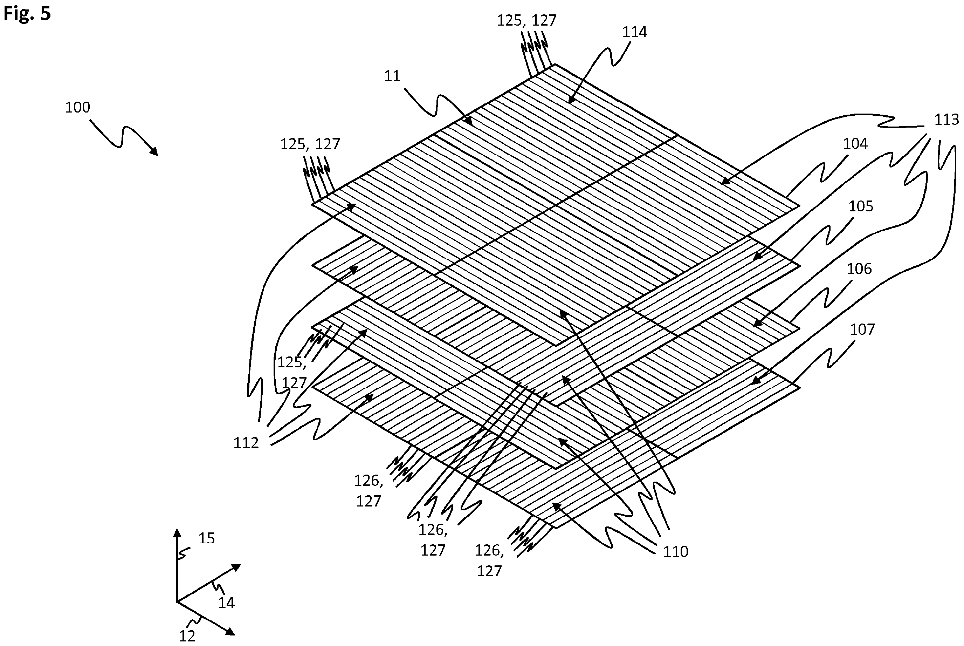

Fig. 5 zeigt eine schematische perspektivische Darstellung einer Explosionsansicht der Statoreinheit 100 mit den einzelnen Statorlagen.

Die Statoreinheit 100 umfasst in der vertikalen Richtung 15 unter der an der Statorfläche 11 angeordneten ersten Statorlage 104 eine zweite Statorlage 105, unter der zweiten Statorlage 105 eine dritte Statorlage 106 und unter der dritten Statorlage 106 eine vierte Statorlage 107. Soweit im Folgenden keine Unterschiede beschrieben werden, sind die zweite, dritte und vierte Statorlage 105, 106, 107 ausgebildet wie die in Fig. 4 dargestellte erste Statorlage 104 an der Statorfläche 11 der Statoreinheit 100.

Die ersten bis vierten Statorsektoren 110, 112, 113, 114 umfassen in der dritten Statorlage 106, wie in der ersten Statorlage 104, entlang der ersten Richtung 12 länglich ausgedehnte und in der zweiten Richtung 14 nebeneinander und aneinander anschließend angeordnete Leiterstreifen 125. In der zweiten Statorlage 105 und in der vierten Statorlage 107 umfassen die ersten bis vierten Statorsektoren 110, 112, 113, 114 weitere Leiterstreifen 126. Soweit im Folgenden keine Unterschiede beschrieben werden, sind die weiteren Leiterstreifen 126 ausgebildet wie die Leiterstreifen 125 in der ersten Statorlage 104 und in der dritten Statorlage 106. Anders als die Leitersteifen 125 der ersten und dritten Statorlage 104, 106, sind die weiteren Leiterstreifen 126 der zweiten und vierten Statorlage 105, 107 entlang der zweiten Richtung 14 länglich ausgedehnt und in der ersten Richtung 12 nebeneinander und aneinander anschließend angeordnet.

Sowohl die Leiterstreifen 125 als auch die weiteren Leiterstreifen 126 bilden einen Magnetfelderzeuger 127.

Die ersten bis vierten Statorsektoren 110, 112, 113, 114 umfassen in der ersten und dritten Statorlage 104, 106 ausschließlich die entlang der ersten Richtung 12 länglich ausgedehnten Leiterstreifen 125 und nicht auch noch zusätzlich die entlang der zweiten Richtung 14 länglich ausgedehnten weiteren Leiterstreifen 126. Ebenso umfassen die ersten bis vierten Statorsektoren 110, 112, 113, 114 in der zweiten und vierten Statorlage 105, 107 ausschließlich die entlang der zweiten Richtung 14 länglich ausgedehnten weiteren Leiterstreifen 126 und nicht auch noch zusätzlich die entlang der ersten Richtung 12 länglich ausgedehnten Leiterstreifen 125.

Die ersten bis vierten Statorsektoren 110, 112, 113, 114 weisen in allen ersten bis vierten Statorlagen 104, 105, 106, 107 jeweils die gleichen Abmessungen auf. Insbesondere weisen die ersten bis vierten Statorsektoren 110, 112, 113, 114 in allen ersten bis vierten Statorlagen 104, 105, 106, 107 in der ersten Richtung 12 und in der zweiten Richtung 14 jeweils gleiche Abmessungen auf.

Die Leiterstreifen 125 und weiteren Leitungsstreifen 126 übereinander angeordneter ersten bis vierten Statorlagen 104, 105, 106, 107 sind jeweils elektrisch isoliert voneinander ausgebildet. Beispielsweise können die ersten bis vierten Statorlagen 104, 105, 106, 107 jeweils als voneinander isolierte Leiterstreifenlagen einer mehrlagigen Leiterplatte ausgebildet sein.

Die ersten bis vierten Statorsektoren 110, 112, 113, 114 sind unabhängig voneinander bestrombar ausgebildet. Insbesondere sind die Leiterstreifen 125 und die weiteren Leiterstreifen 126 der ersten bis vierten Statorsektoren 110, 112, 113, 114 auf der Statoreinheit 100 elektrisch isoliert voneinander ausgebildet.

Während die Leiterstreifen 125 und weiteren Leiterstreifen 126 der einzelnen ersten bis vierten Statorsektoren 110, 112, 113, 114 auf der Statoreinheit 100 jeweils elektrisch isoliert von den Leiterstreifen 125 und weiteren Leiterstreifen 126 der übrigen ersten bis vierten Statorsektoren 110, 112, 113, 114 ausgebildet sind, können die Leiterstreifen 125 und weiteren Leiterstreifen 126 innerhalb der einzelnen ersten bis vierten Statorsektoren 110, 112, 113, 114 jeweils elektrisch leitend miteinander verbunden sein. Insbesondere können innerhalb der ersten bis vierten Statorsektoren 110, 112, 113, 114 jeweils übereinanderliegende Leiterstreifen 125 der ersten Statorlage 104 und der dritten Statorlage 106 elektrisch leitend miteinander verbunden sein. Beispielsweise können jeweils übereinanderliegende Leiterstreifen 125 der ersten bis vierten Statorsektoren 110, 112, 113, 114 in Reihe geschaltet sein. Ebenso können innerhalb der ersten bis vierten Statorsektoren 110, 112, 113, 114 jeweils übereinanderliegende weitere Leiterstreifen 126 der zweiten Statorlage 105 und der vierten Statorlage 107 elektrisch leitend miteinander verbunden sein. Beispielsweise können jeweils übereinanderliegende weitere Leiterstreifen 126 der ersten bis vierten Statorsektoren 110, 112, 113, 114 in Reihe geschaltet sein.

Alternative, hier nicht dargestellte Ausführungsformen der Statoreinheit 100 können zwischen der zweiten und dritten Statorlage 105, 106 in der vertikalen Richtung 15 untereinander angeordnete weitere Statorlagen umfassen. Dabei kann die Statoreinheit 100 in der vertikalen Richtung 15 jeweils abwechselnd Statorlagen mit im Wesentlichen entlang der ersten Richtung 12 länglich ausgedehnten Leiterstreifen 125 und Statorlagen mit im Wesentlichen entlang der zweiten Richtung 14 länglich ausgedehnten weiteren Leiterstreifen 126 umfassen. Bei einer dazu alternativen, ebenfalls nicht dargestellten Ausführungsform kann die Statoreinheit 100 in der vertikalen Richtung 15 jeweils Statorlagen mit im Wesentlichen entlang der ersten Richtung 12 länglich ausgedehnten Leiterstreifen 125 und Statorlagen mit im Wesentlichen entlang der zweiten Richtung 14 länglich ausgedehnten weiteren Leiterstreifen 126 umfassen, wobei die Summe der Statorlagen mit im Wesentlichen entlang der ersten Richtung 12 länglich ausgedehnten Leiterstreifen 125 und die Summe der Statorlagen mit im Wesentlichen entlang der zweiten Richtung 14 länglich ausgedehnten weiteren Leiterstreifen 126 einen gleichen mittleren Abstand zu der Statorfläche 11 aufweisen. Außerdem können bei alternativen, nicht dargestellten Ausführungsformen der Statoreinheit 100 zwischen der ersten und der zweiten Statorlage 104, 105 und/oder zwischen der dritten und der vierten Statorlage 106, 107 weitere Statorlagen mit entlang der ersten Richtung 12 ausgedehnten Leiterstreifen 125 oder mit entlang der zweiten Richtung 14 ausgedehnten weiteren Leiterstreifen 126 angeordnet sein.

Die Leiterstreifen 125 und weiteren Leiterstreifen 126 der ersten bis vierten Statorsektoren 110, 112, 113, 114 sind innerhalb der ersten bis vierten Statorlagen 104, 105, 106, 107 jeweils zu Statorsegmenten zusammengefasst.

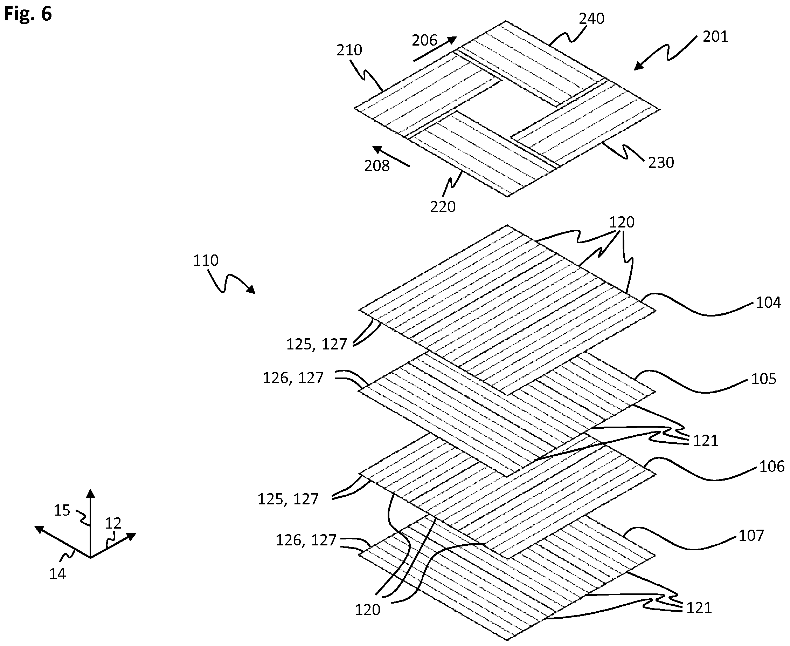

Fig. 6 zeigt eine schematische Darstellung der ersten bis vierten Statorlagen 104, 105, 106, 107 des ersten Statorsektors 110 mit den einzelnen Statorsegmenten.

Die Leiterstreifen 125 und weiteren Leiterstreifen 126 des ersten Statorsektors 110 sind innerhalb der ersten bis vierten Statorlagen 104, 105, 106, 107 jeweils zu Statorsegmenten 120, 121 zusammengefasst. Der erste Statorsektor 110 umfasst in jeder ersten bis vierten Statorlage 104, 105, 106, 107 jeweils drei nebeneinander und aneinander anschließend angeordnete Statorsegmente 120, 121. Jedes der Statorsegmente 120, 121 umfasst jeweils sechs nebeneinander angeordnete Leiterstreifen 125 und weiteren Leiterstreifen 126. Der erste Statorsektor 110 umfasst in der ersten und dritten Statorlage 104, 106 jeweils drei erste Statorsegmente 120 und in der zweiten und vierten Statorlage 105, 107 jeweils drei zweite Statorsegmente 121. Die ersten Statorsegmente 120 umfassen jeweils sechs nebeneinander liegende der entlang der zweiten Richtung 14 nebeneinander angeordneten und entlang der ersten Richtung 12 länglich ausgedehnten Leiterstreifen 125. Die zweiten Statorsegmente 121 umfassen jeweils sechs nebeneinander liegende der entlang der ersten Richtung 12 nebeneinander angeordneten und entlang der zweiten Richtung 14 länglich ausgedehnten weiteren Leiterstreifen 126.

Der erste Statorsektor 110 der Statoreinheit 100 umfasst damit in der ersten Statorlage 104 und in der dritten Statorlage 106 ausschließlich Leiterstreifen 125, die entlang der ersten Richtung 12 länglich ausgedehnt sind, und in der zweiten Statorlage 105 und in der vierten Statorlage 107 ausschließlich weitere Leiterstreifen 126, die entlang der zweiten Richtung 14 länglich ausgedehnt sind.

Die ersten und zweiten Statorsegmente 120, 121 weisen, abgesehen von ihrer Orientierung, identische Abmessungen auf. Insbesondere entsprechen die Abmessungen der ersten Statorsegmente 120 in der ersten Richtung 12 den Abmessungen der zweiten Statorsegmente 121 in der zweiten Richtung 14 und die Abmessungen der ersten Statorsegmente 120 in der zweiten Richtung 14 entsprechen den Abmessungen der zweiten Statorsegmente 121 in der ersten Richtung 12.

Die Statorsegmente 120, 121 sind derart übereinanderliegend angeordnet, dass sich jeweils jedes der ersten Statorsegmente 120 der ersten und dritten Statorlage 104, 106 des ersten Statorsektors 110 in der ersten Richtung 12 über die drei in der ersten Richtung 12 nebeneinander angeordneten zweiten Statorsegmente 121 der zweiten und vierten Statorlage 105, 107 des ersten Statorsektors 110 erstreckt. Außerdem erstrecken sich die zweiten Statorsegmente 121 der zweiten und vierten Statorlage 105, 107 des ersten Statorsektors 110 in der zweiten Richtung 14 über alle in der zweiten Richtung 14 nebeneinander angeordneten ersten Statorsegmente 120 der ersten und dritten Statorlage 104, 106 des ersten Statorsektors 110.

Die Anordnung der Leiterstreifen 125 und weiteren Leiterstreifen 126 in den ersten bis vierten Statorlagen 104, 105, 106, 107 des zweiten Statorsektors 112, des dritten Statorsektors 113 und des vierten Statorsektors 114 entspricht der in Fig. 6 dargestellten Anordnung der Leiterstreifen 125 und weiteren Leiterstreifen 126 in den ersten bis vierten Statorlagen 104, 105, 106, 107 des ersten Statorsektors 110.

Im Betrieb des Planarantriebssystems 1 kann der Läufer 200 derart über der Statoreinheit 100 ausgerichtet sein, dass die erste Läuferrichtung 206 entlang der ersten Richtung 12 und die zweite Läuferrichtung 208 entlang der zweiten Richtung 14 orientiert ist. Die erste Magneteinheit 210 und die dritte Magneteinheit 230 können im Betrieb mit dem durch die Leiterstreifen 125 der ersten Statorsegmente 120 erzeugten Magnetfeld wechselwirken, um den Läufer 200 entlang der zweiten Richtung 14 anzutreiben. Die zweite Magneteinheit 220 und die vierte Magneteinheit 240 können im Betrieb mit dem durch die weiteren Leiterstreifen 126 der zweiten Statorsegmente 121 erzeugten Magnetfeld wechselwirken, um den Läufer 200 entlang der ersten Richtung 12 anzutreiben.

Alternativ kann der Läufer 200, anders als in Fig. 6 dargestellt, auch derart ausgerichtet sein, dass die erste Läuferrichtung 206 entlang der zweiten Richtung 14 und die zweite Läuferrichtung 208 entlang der ersten Richtung 12 orientiert ist. In diesem Fall wirken die erste und die dritte Magneteinheit 210, 230 mit dem Magnetfeld der zweiten Statorsegmente 121 zum Antreiben des Läufers 200 in die erste Richtung 12 und die zweite und die vierte Magneteinheit 220, 240 mit dem Magnetfeld der ersten Statorsegmente 120 zum Antreiben des Läufers 200 in die zweite Richtung 14 zusammen.

Die Leiterstreifen 125 oder weiteren Leiterstreifen 126 der einzelnen ersten oder zweiten Statorsegmente 120, 121 sind jeweils unabhängig von den Leiterstreifen 125 oder weiteren Leiterstreifen 126 der übrigen ersten oder zweiten Statorsegmente 120, 121 mit den Antriebsströmen bestrombar. Insbesondere hängen die Antriebsströme in einem der ersten oder zweiten Statorsegmente 120, 121 nicht zwingend von Antriebsströmen in einem der anderen ersten oder zweiten Statorsegmente 120, 121 ab. Außerdem können die Leiterstreifen 125 oder weiteren Leiterstreifen 126 eines der ersten oder zweiten Statorsegmente 120, 121 mit Antriebsströmen beaufschlagt werden, während die Leiterstreifen 125 oder weiteren Leiterstreifen 126 eines anderen, beispielsweise eines benachbarten, ersten oder zweiten Statorsegments 120, 121 stromlos sind. Die Leiterstreifen 125 oder weiteren Leiterstreifen 126 der einzelnen ersten oder zweiten Statorsegmente 120, 121 sind auf der Statoreinheit 100 elektrisch isoliert von den Leiterstreifen 125 oder weiteren Leiterstreifen 126 der übrigen ersten oder zweiten Statorsegmente 120, 121 ausgeführt. Die Leiterstreifen 125 oder weiteren Leiterstreifen 126 unterschiedlicher ersten oder zweiten Statorsegmente 120, 121 können beispielsweise aus jeweils separaten Leistungsmodulen oder aus separaten Stromerzeugungseinheiten bzw. Endstufen eines Leistungsmoduls des Statormoduls 10 mit den Antriebsströmen beaufschlagt werden.

Die Leiterstreifen 125 oder weiteren Leiterstreifen 126 in den einzelnen ersten bis vierten Statorsektoren 110, 112, 113, 114 können jeweils zu Mehrphasensystemen mit einem gemeinsamen Sternpunkt zusammengeschaltet sein. Der Sternpunkt kann auf der Statoreinheit 100 ausgebildet sein. Insbesondere können die Leiterstreifen 125 oder weiteren Leiterstreifen 126 zu Dreiphasensystemen mit einem gemeinsamen Sternpunkt zusammengeschaltet sein. Die Dreiphasensysteme können jeweils sechs benachbarte Leiterstreifen 125 oder sechs benachbarte weitere Leiterstreifen 126 umfassen. Die Anzahl benachbarter Leiterstreifen 125 oder weiteren Leiterstreifen 126 in einem der Dreiphasensysteme kann auch jeweils drei, zwölf oder ein anderes Vielfaches von drei betragen.

Die Mehrphasensysteme können auf der Statoreinheit 100 derart kontaktierbar sein, dass jedes der Mehrphasensysteme unabhängig von den übrigen Mehrphasensystemen mit einem Antriebsstrom beaufschlagbar ist. Alternativ können auch jeweils zwei oder mehr der Mehrphasensysteme auf der Statoreinheit 100 derart miteinander verbunden sein, dass die verbundenen Mehrphasensysteme jeweils zusammen mit einem gemeinsamen Antriebsstrom beaufschlagt werden. Beispielsweise können die verbundenen Mehrphasensysteme auf der Statoreinheit 100 seriell oder parallel geschaltet sein.

Bei einer Verschaltung der Leiterstreifen 125 oder weiteren Leiterstreifen 126 zu Mehrphasensystemen werden zur Bestromung der Leiterstreifen 125 oder weiteren Leiterstreifen 126 weniger Kontakte benötigt als bei einer separaten Bestromung der einzelnen Leiterstreifen 125 oder weiteren Leiterstreifen 126. Dadurch wird der für die Bestromung der Leiterstreifen 125 oder weiteren Leiterstreifen 126 benötigte Hardwareaufwand, insbesondere die Anzahl der für die Bestromung benötigten Stromerzeugungseinheiten, reduziert.

Die ersten bis vierten Statorsektoren 110, 112, 113, 114 können, wie in den Fig. 4 und 5 dargestellt, in jeder ersten bis vierten Statorlage 104, 105, 106, 107 jeweils achtzehn Leiterstreifen 125 oder weiteren Leiterstreifen 126 umfassen. Jeweils sechs benachbarte Leiterstreifen 125 oder weiteren Leiterstreifen 126 können zu einem Dreiphasensystem verschaltet sein und die ersten bis vierten Statorsektoren 110, 112, 113, 114 können jeweils drei in der ersten Richtung 12 nebeneinanderliegende Dreiphasensysteme und jeweils drei in der zweiten Richtung 14 nebeneinanderliegende Dreiphasensysteme umfassen. Dabei können Leiterstreifen 125 oder weiteren Leiterstreifen 126, die im Wesentlichen in der gleichen Richtung 12, 14 ausgedehnt sind und in den ersten bis vierten Statorlagen 104, 105, 106, 107 übereinanderliegen, in Serie zu einem gemeinsamen Dreiphasensystem verschaltet sein. Die Leiterstreifen 125 oder weiteren Leiterstreifen 126 können dabei derart verschaltet sein, dass in der vertikalen Richtung 15 übereinanderliegende Leiterstreifen 125 oder weiteren Leiterstreifen 126 jeweils mit dem gleichen Antriebsstrom beaufschlagt werden. Die Dreiphasensysteme weisen damit drei Phasen auf, die aus in den ersten bis vierten Statorlagen 104, 105, 106, 107 übereinanderliegenden Leiterstreifen 125 oder weiteren Leiterstreifen 126 zusammengeschaltet sind.

Beispielsweise können in den einzelnen ersten bis vierten Statorlagen 104, 105, 106, 107 jeweils alle übereinanderliegenden und parallel ausgerichteten Leiterstreifen 125 oder weiteren Leiterstreifen 126 in Serie geschaltet sein. Insbesondere können die Leiterstreifen 125 von in der ersten Statorlage 104 und in der dritten Statorlage 106 übereinanderliegenden Dreiphasensystemen, sowie die weiteren Leiterstreifen 126 von in der zweiten Statorlage 105 und in der vierten Statorlage 107 übereinanderliegenden Dreiphasensystemen jeweils seriell zu einem gemeinsamen Dreiphasensystem verschaltet sein. Dabei können jeweils alle in der vertikalen Richtung 15 übereinanderliegenden und parallel orientierten Leiterstreifen 125 oder weiteren Leiterstreifen 126 der ersten und dritten Statorlage 104, 106 und der zweiten und vierten Statorlage 105, 107 in Serie geschaltet sein.

Insbesondere sind bei der Statoreinheit 100 innerhalb der einzelnen Statorsegmente 120 die entlang der ersten Richtung 12 länglich ausgedehnten Leiterstreifen 125 jeweils zu Mehrphasensystemen mit einem gemeinsamen Sternpunkt verschaltet. Dabei sind die einzelnen Mehrphasensysteme verschiedener Statorsegmente 120 jeweils unabhängig voneinander bestrombar. Ebenso sind alle weiteren Leiterstreifen 126 der einzelnen weiteren Statorsegmente 121 jeweils zu weiteren Mehrphasensystemen verschaltet. Die einzelnen weiteren Mehrphasensysteme der weiteren Statorsegmente 121 sind jeweils unabhängig voneinander und unabhängig von den Mehrphasensystemen der Statorsegmente 120 bestrombar. Insbesondere sind die Leiterstreifen 125 der Statorsegmente 120 und die weiteren Leiterstreifen 126 der weiteren Statorsegmente 121 jeweils zu Dreiphasensystemen verschaltet. Die Leiterstreifen 125 und die weiteren Leiterstreifen 126 können jeweils mit einem dreiphasigen Antriebsstrom beaufschlagt werden. Die Antriebsströme umfassen eine erste Phase U, eine zweite Phase V und eine dritte Phase W, die untereinander jeweils einen Phasenversatz von 120° aufweisen.

Die Leiterstreifen 125 sind räumlich in der zweiten Richtung 14 um jeweils ein Drittel der wirksamen Wellenlänge der mit den Leiterstreifen 125 wechselwirkenden Antriebsmagnete 211 der ersten und dritten Magneteinheit 210, 230 versetzt angeordnet. Die weiteren Leiterstreifen 126 sind räumlich in der ersten Richtung 12 um jeweils ein Drittel der wirksamen weiteren Wellenlänge der mit den weiteren Leiterstreifen 126 wechselwirkenden weiteren Antriebsmagnete 221 der zweiten und vierten Magneteinheit 220, 240 versetzt angeordnet.

Der Läufer stellt das bewegbare Element der Vorrichtung dar und weist Mittel zur Erzeugung eines Magnetfeldes, insbesondere Magneten oder Permanentmagneten auf. Das Magnetfeld des Läufers sorgt mit dem veränderbaren Magnetfeld der Statoreinheit dafür, dass der Läufer über die Statoreinheit bewegt wird, so dass insbesondere ein Luftspalt zwischen der Statoreinheit und dem Läufer ausgebildet wird.

Der Läufer 200 kann also wie in der Beschreibung der Fig. 1 bis 6 erläutert, über eine aus Statormodulen 10 gebildete Antriebsfläche bewegt werden. Dies erfolgt durch Erzeugen eines Antriebsmagnetfelds mittels der Magnetfelderzeuger 127, die als Leiterstreifen 125 und weitere Leiterstreifen 127 ausgestaltet sind. Im Folgenden wird nun beschrieben, anhand welcher Kriterien die Leiterstreifen 125 und weiteren Leiterstreifen 126 mit Strömen beaufschlagt werden und anhand welcher Kriterien diese Bestromung erfolgt. Dabei werden virtuelle zweidimensionale Potentialverläufe für den Läufer 200 verwendet.

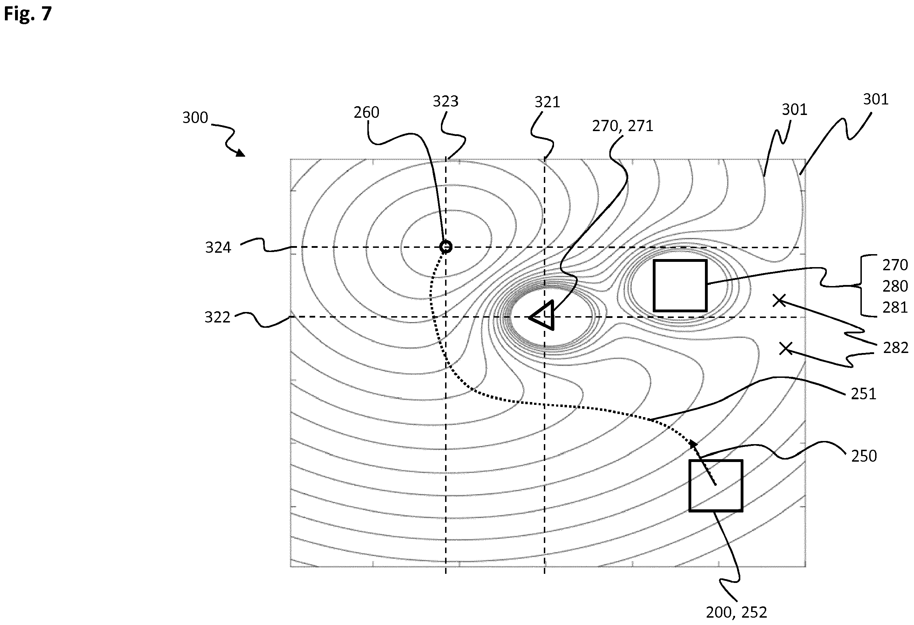

Fig. 7 zeigt einen virtuellen zweidimensionalen Potentialverlauf 300, der in einem Antriebsverfahren eines Planarantriebssystems verwendet werden kann. Ein Läufer 200, der den in den Fig. 1 bis 3 gezeigten Läufern 200 entsprechen kann, wird auf einer Antriebsfläche 22 bewegt. Die Antriebsfläche 22 kann die Statoroberflächen 11 der Fig. 1 und 2 umfassen. In Fig. 7 dargestellt ist ein Verlauf von Äquipotentiallinien 301. Anhand des virtuellen zweidimensionalen Potentialverlaufs 300 soll eine Bewegung des Läufers 200 zu einem Zielpunkt 260 ermöglicht werden, indem die Statoreinheiten 100 beziehungsweise Leiterstreifen 125 oder weiteren Leiterstreifen 126 der in den Fig. 1 bis 6 gezeigten Statormodule 10 entsprechend bestromt werden, wodurch sich eine Antriebskraft aufgrund der durch die Bestromung entstehenden Antriebsmagnetfelder gemeinsam mit dem Permanentmagneten des Läufers 200 ergibt. Alternativ kann eine Steuerung von Magnetfelderzeugern derart erfolgen, dass sich ein solches Antriebsmagnetfeld ergibt. Ebenfalls in Fig. 7 dargestellt sind zwei Hindernisse 270, wobei eines der Hindernisse 270 ein weiterer Läufer 280 ist. Der Läufer 200 ist an einer ersten Position 252 angeordnet. Die Äquipotentiallinien 301 ergeben sich dabei aus einem anziehenden Potential des Zielpunkts 260 und abstoßenden Potentialen der Hindernisse 270. Aufgrund der Hindernisse 270 und des Zielpunkts 260 wird also der virtuelle zweidimensionale Potentialverlauf 300 ermittelt. In einem anschließenden Schritt wird ein virtueller Kraftvektor 250 an der ersten Position 252 des Läufers ermittelt. Der virtuelle Kraftvektor 250 weist dabei eine Vektorrichtung und eine Vektorlänge auf, die in Fig. 7 mittels der für Vektoren üblichen Pfeildarstellung verdeutlicht werden. Anschließend werden die Leiterstreifen der Sektoren der Statormodule derart bestromt, dass die Bestromung der Leiterstreifen ein Antriebsmagnetfeld, welches mit dem Magnetfeld des Läufers 200 wechselwirkt, derart erzeugt wird, dass durch die Wechselwirkung des Antriebsmagnetfelds mit dem Magnetfeld eine resultierende Kraft auf den Läufer 200 wirkt, wobei eine Richtung der resultierenden Kraft anhand der Vektorrichtung des virtuellen Kraftvektors 250 eingestellt werden kann. Eine Stromstärke der Bestromung kann anhand der Vektorlänge des virtuellen Kraftvektors 250 eingestellt werden. Dadurch bewegt sich der Läufer 200 ein Stück weit auf einer Bewegungsbahn 251 in Richtung auf den Zielpunkt 260 zu. Alternativ kann eine Steuerung der Erzeugung des Antriebsmagnetfelds auch durch ein entsprechendes Steuern eines Magnetfelderzeugers erfolgen.

Es kann vorgesehen sein, die resultierende Kraft derart aufgrund des Antriebsmagnetfeldes und des Magnetfeldes zu erzeugen, dass sich der Läufer 200 in Richtung der virtuellen Kraft bewegt. Dadurch kann insbesondere eine bereits erfolgende Bewegung des Läufers 200 berücksichtigt werden.

Dabei kann vorgesehen sein, neben der Vektorlänge auch andere Parameter bei der Steuerung der Bestromung der Leiterstreifen zusätzlich zu berücksichtigen. Beispielsweise kann die Steuerung der Bestromung derart erfolgen, dass ein aufgrund der Leiterstreifen und/oder der Temperatur der Statormodule vorgegebener Maximalstrom nicht überschritten wird.

Die Temperatur auf den einzelnen Punkten der Antriebsfläche 22 könnte außerdem durch ein eigenes Potential dargestellt und berücksichtigt werden. Hierdurch würden Punkte der Antriebsfläche 22, die durch eine hohe Bestromung in der Vergangenheit heiß geworden sind, durch den Läufer 200 umfahren werden. Die Temperatur der Antriebsfläche 22 könnte durch Temperatursensoren detektiert werden. Ferner kann die Bestromung der Leiterstreifen reduziert werden, wenn eine Beladung eines Läufers 200 nur eine maximale Beschleunigung erreichen darf, beispielsweise dann, wenn eine Flüssigkeit auf dem Läufer 200 in einem offenen Gefäß transportiert wird. Es können also auch Betriebsparameter der Statormodule und Bewegungsparameter des Läufers 200 berücksichtigt werden. Diese beiden verschiedenen Parameter können auch bei der Richtung der resultierenden Kraft berücksichtigt werden.

Um den Magnetfelderzeuger 127, der beispielsweise in Form von leiterstreifen 125 und weiterer Leiterstreifen 126 ausgeführt sein kann, zu steuern, kann vorgesehen sein, dass die Richtung der aufgrund der Wechselwirkung des durch den Magnetfelderzeugers 127 erzeugten Antriebsmagnetfeldes und des Magnetfeldes des Läufers 200 wirkenden resultierenden Kraft parallel zur Vektorrichtung eingestellt wird. Dabei können zusätzlich Dynamikgrenzen und eine Dynamikplanung im Allgemeinen berücksichtigt werden.

Alternativ kann vorgesehen sein, die Richtung und Stärke resultierende Kraft derart einzustellen, dass der Läufer 200 so bald wie möglich in Richtung der virtuellen Kraft, also in die Vektorrichtung, bewegt wird, wobei vorgesehen sein kann, dabei erlaubte Dynamikgrenzen zu berücksichtigen. Falls sich der Läufer 200 bereits bewegt, kann die Richtung der resultierenden Kraft, die dafür nötig ist, von der Richtung der virtuellen Kraft abweichen.

Weitere Kriterien, die Richtung und die Stärke der resultierenden Kraft anhand der Vektorrichtung und der Vektorlänge einzustellen, sind ebenfalls denkbar, beispielsweise indem eine Kombination der beiden vorgenannten Methoden angewendet wird.

In einem Ausführungsbeispiel des Verfahrens ist vorgesehen, dass die erste Position 252 des Läufers 200 mittels Sensoren innerhalb der Statormodule ermittelt wird. Es kann ferner zusätzlich oder alternativ vorgesehen sein, eine zweite Position der Hindernisse 270, insbesondere eine zweite Position 271 des Hindernisses 270 sowie eine weitere zweite Position 281 des weiteren Läufers 280 mittels dieser Sensoren zu ermitteln.

In einem Ausführungsbeispiel wird der virtuelle Kraftvektor 250 anhand einer zweidimensionalen Ableitung des virtuellen zweidimensionalen Potentialverlaufs 300 ermittelt. Die Berechnung kann insbesondere mittels einer Berechnung eines Gradienten des virtuellen zweidimensionalen Potentialverlaufs 300 durchgeführt werden.

Wird die Berechnung des virtuellen Kraftvektors 250 mittels des Gradienten des virtuellen zweidimensionalen Potentialverlaufs 300 durchgeführt und der Läufer 200 anschließend jeweils derart angetrieben, dass auf allen Punkten der Bewegungsbahn 251 der virtuelle Kraftvektor 250 parallel zur Bewegungsbahn ist, so bewegt sich der Läufer auf der Bewegungsbahn 251 derart, dass die Bewegungsbahn 251 die Äquipotentiallinien 301 senkrecht schneidet.

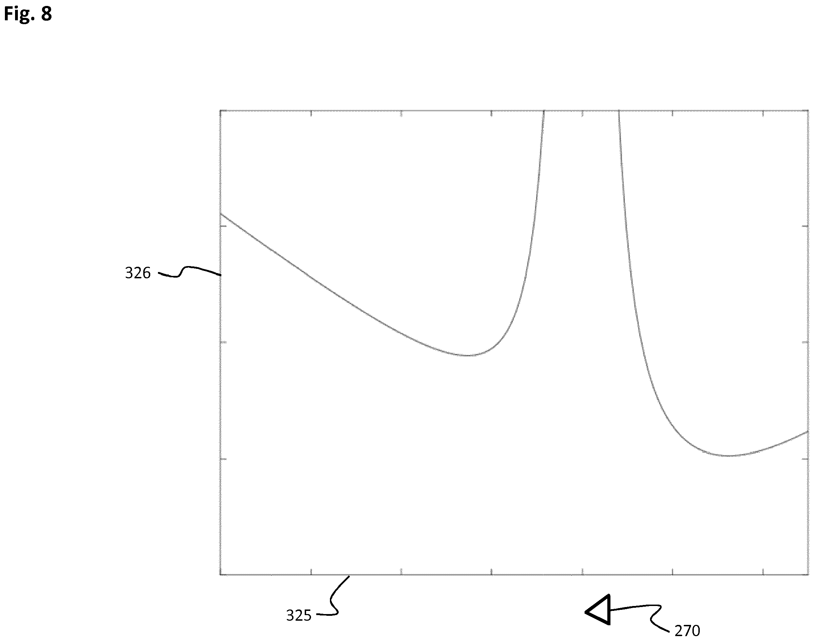

Fig. 8 zeigt einen virtuellen Potentialverlauf 326 an einer in Fig. 7 dargestellten ersten Schnittlinie 321. Die erste Schnittlinie 321 verläuft dabei durch das Hindernis 270. Der virtuelle Potentialverlauf 326 verdeutlicht, dass das virtuelle Potential des Hindernisses 270 unendlich groß wird. In Fig. 8 ist dabei der virtuelle Potentialverlauf 326 über dem Ort 325 aufgetragen, wobei der Ort 325 einer Position entlang der ersten Schnittlinie 321 der Fig. 7 entspricht.

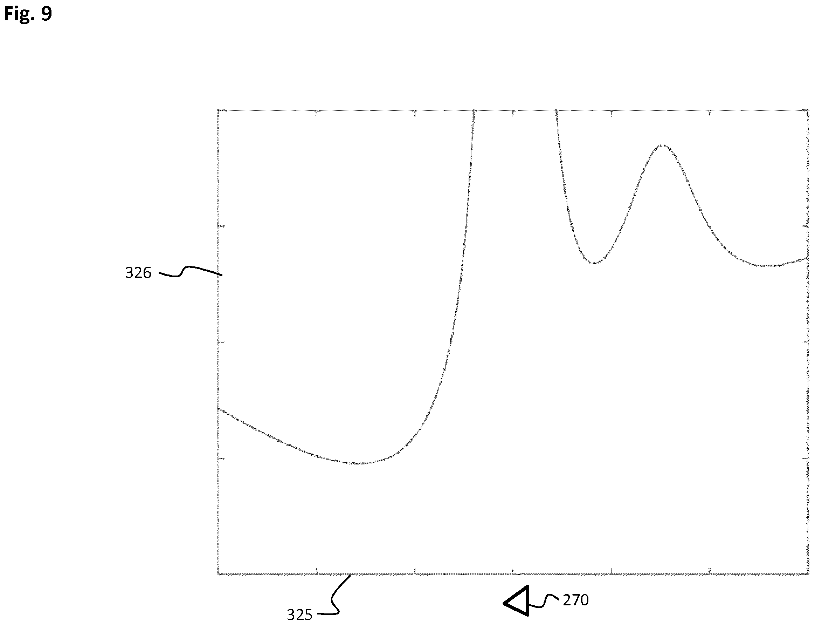

Fig. 9 zeigt eine zur Fig. 8 identische Darstellung eines virtuellen Potentialverlaufs 326 entlang einer zweiten Schnittlinie 322 der Fig. 7, die ebenfalls durch das Hindernis 270 verläuft.

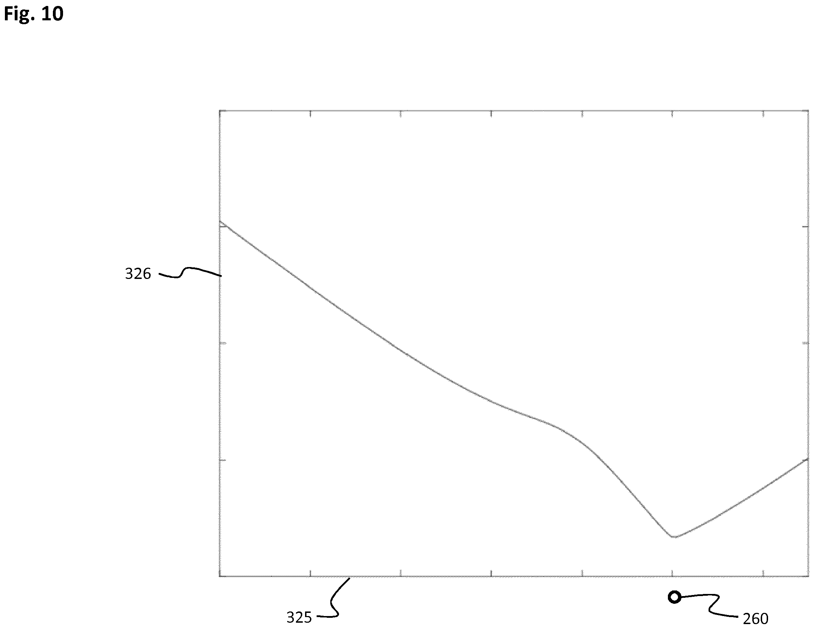

Fig. 10 zeigt einen virtuellen Potentialverlauf 326 analog der Fig. 8 und 9 entlang einer dritten Schnittlinie 323 der Fig. 7, wobei die dritte Schnittlinie 323 parallel zur ersten Schnittlinie 321 durch den Zielpunkt 260 geführt ist. Dadurch wird deutlich, dass dem Zielpunkt 260 ein anziehendes Potential zugeordnet ist.

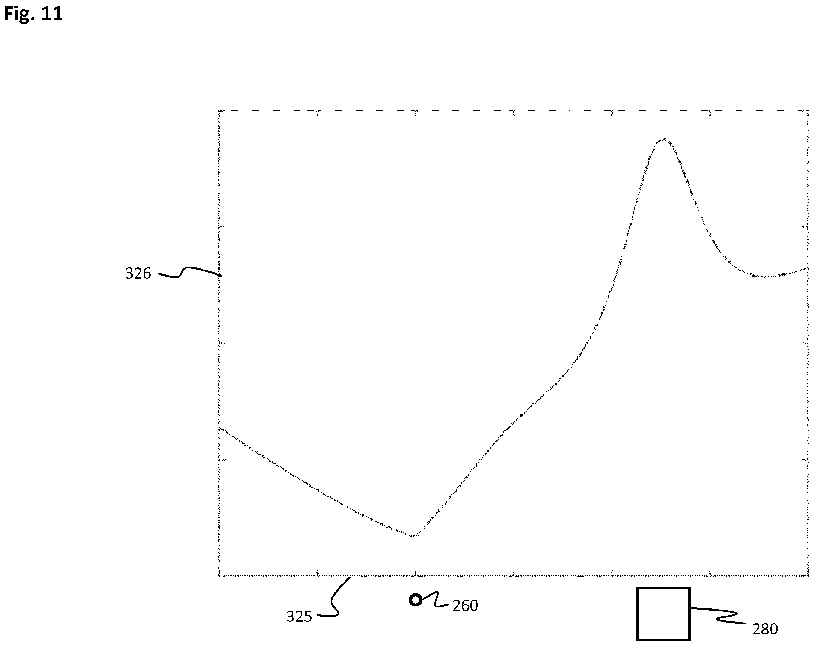

Fig. 11 zeigt einen virtuellen Potentialverlauf 326 entlang einer vierten Schnittlinie 324 der Fig. 7, die ebenfalls durch den Zielpunkt 260 und parallel zur zweiten Schnittlinie 322 geführt ist. In diesem virtuellen Potentialverlauf 326 ist rechts vom Bereich des Zielpunkts 260 ein höheres Potential im Bereich des weiteren Läufers 280 sichtbar.

Der in den Fig. 7 bis 11 gezeigte virtuelle zweidimensionale Potentialverlauf 300 kann exemplarisch anhand der folgenden Berechnungen ermittelt werden. Der in Fig. 7 gezeigten Antriebsfläche 22 sind Koordinaten x und y im Bereich zwischen 0 und 1 zugeordnet. Für den Zielpunkt 260 wird ein quadratisches Teilpotential anhand der Gleichung

$$V\_z = 15*sqrt( (x-0,2)^2 + (y-0,8)^2 )$$

bestimmt. Dem Hindernis 270 ist ein Teilpotential anhand der Gleichung

$$V\_h = 0.1/( (x-0,4)^2 + (y-0,6)^2 )$$

zugeordnet. Dem weiteren Läufer 280 ist ein Teilpotential anhand der Gleichung

$$V\_m = 0.1/(\ (x-0{,}7)\char94 2 + (y-0{,}7)\char94 2\ )$$

zugeordnet.

Der virtuelle zweidimensionale Potentialverlauf 300 ergibt sich entsprechend aus der Superposition der Einzelpotentiale:

$$V = V\_z + V\_h + V\_m.$$

Alternativ können auch andere Teilpotentiale mit anderen Gleichungen in die Berechnung eingehen.

In einem Ausführungsbeispiel wird eine Temperatur eines Bereichs eines Statormoduls 10, insbesondere eine Temperatur eines Statormoduls 10 oder mehrerer Statormodule 10 bei der Ermittlung des virtuellen zweidimensionalen Potentialverlaufs 300 berücksichtigt. Dabei kann Bereichen der Antriebsfläche 22 ein abstoßendes Potential zugeordnet werden, wobei das abstoßende Potential umso größer ist, je höher die Temperatur im entsprechenden Bereich ausfällt. Zusätzlich können Temperatursensoren vorgesehen sein, mit denen die Temperatur der Bereiche ermittelt wird. Dadurch können Bereiche der Antriebsfläche 22, die aufgrund einer vorangegangenen Erzeugung einer Antriebskraft erwärmt sind, weniger stark frequentiert werden und dadurch wieder abkühlen.

In einem Ausführungsbeispiel wird das in Fig. 7 beschriebene Verfahren mit dem virtuellen zweidimensionalen Potentialverlauf 300 und dem in den Fig. 8 bis 11 gezeigten virtuellen Potentialverläufen 326 ebenfalls für den weiteren Läufer 280 durchgeführt. Dabei ist vorgesehen, dem Läufer 200 und dem weiteren Läufer 280 unterschiedliche Prioritäten zuzuordnen. Die Priorität der Läufer 200, 280 ist dabei ein Maß dafür, welcher Läufer 200, 280 bei der Bewegung der Läufer 200, 280 über die Antriebsfläche 22 bevorzugt in Richtung seines Zielpunkts 260 bewegt werden soll und/oder welcher Läufer 200, 280 eher dem anderen Läufer 200, 280 ausweichen soll. Die Ermittlung des virtuellen zweidimensionalen Potentialverlaufs 300 wird derart durchgeführt, dass der Läufer 200 oder der weitere Läufer 280, dem die höhere Priorität zugeordnet ist, ein höheres Potential aufweist. Beispielsweise kann dem Läufer 200 eine höhere Priorität zugeordnet sein als dem weiteren Läufer 280. Bei der Ermittlung des virtuellen zweidimensionalen Potentialverlaufs für den Läufer 200 wird der weitere Läufer 280 mit einem geringeren Potential berücksichtigt, als der Läufer 200 bei der Ermittlung des virtuellen zweidimensionalen Potentialverlaufs für den weiteren Läufer 280.

In einem Ausführungsbeispiel wird das Verfahren nach dem Ablauf einer vorgegebenen Zeitdauer erneut ausgeführt. Dies kann insbesondere bedeuten, das Verfahren in vorgebbaren Zeitzyklen wiederholt durchzuführen. In Fig. 7 kann beispielsweise der Läufer 200 entlang der Bewegungsbahn 251 in Richtung des virtuellen Kraftvektors 250 bewegt werden. Nach einer vorgegebenen oder vorgebbaren Zeitdauer kann nun entweder der virtueller Kraftvektor 250 anhand des bereits ermittelten virtuellen zweidimensionalen Potentialverlaufs 300 erneut ermittelt werden und dadurch beispielsweise in der Richtung angepasst werden, da die Bewegungsbahn 251 nicht linear sondern gekrümmt ist. Nach Durchlaufen eines Teils der gekrümmten Bewegungsbahn 251 wird also die Richtung des virtuellen Kraftvektors 250 in einem erneuten Durchlaufen der Verfahrensschritte verändert.

In einem Ausführungsbeispiel wird eine Bewegung des weiteren Läufers 280 bei der Ermittlung des virtuellen zweidimensionalen Potentialverlaufs 300 berücksichtigt. Dies kann einerseits bei einem mehrmaligen Durchlaufen des Verfahrens anhand der jeweils aktuellen weiteren zweiten Position 281 des weiteren Läufers 280 erfolgen. Andererseits kann eine vorhergesagte weitere zweite Position 281 schon in die Ermittlung des in Fig. 7 gezeigten virtuellen zweidimensionalen Potentialverlaufs einfließen, indem beispielsweise auch zukünftige weitere zweite Positionen 282 bei der Ermittlung des virtuellen zweidimensionalen Potentialverlaufs 251 berücksichtigt werden. Die Bewegung des weiteren Läufers 280 kann dabei entweder mittels Sensoren der Statoreinheit detektiert oder, wenn das Verfahren ebenfalls auf den weiteren Läufer 280 angewendet wird, aufgrund einer durch das Verfahren ausgelösten Bewegung des weiteren Läufers 280 berücksichtigt werden.

In einem Ausführungsbeispiel wird der Zielpunkt 260 beim erneuten Durchführen der Verfahrensschritte verändert. In diesem Fall wird neben der Ermittlung eines neuen virtuellen Kraftvektors 250 auch der gesamte virtuelle zweidimensionale Potentialverlauf 300 anhand des veränderten Zielpunkts neu ermittelt. Ebenso kann vorgesehen sein, eine Neuermittlung des virtuellen zweidimensionalen Potentialverlaufs 300 aufgrund einer Bewegung des weiteren Läufers 280 durchzuführen. Die Bewegung des weiteren Läufers 280 kann dabei entweder mittels Sensoren der Statoreinheit detektiert oder, wenn das Verfahren ebenfalls auf den weiteren Läufer 280 angewendet wird, aufgrund einer durch das Verfahren ausgelösten Bewegung des weiteren Läufers 280 berücksichtigt werden.

In einem Ausführungsbeispiel werden bei der Ermittlung des virtuellen zweidimensionalen Potentialverlaufs 300 virtuelle Ausgleichspotentiale derart berücksichtigt, dass zwischen dem Läufer 200 und dem Zielpunkt 260 keine lokalen Potentialminima auf der Läuferbahn 251 vorliegen.

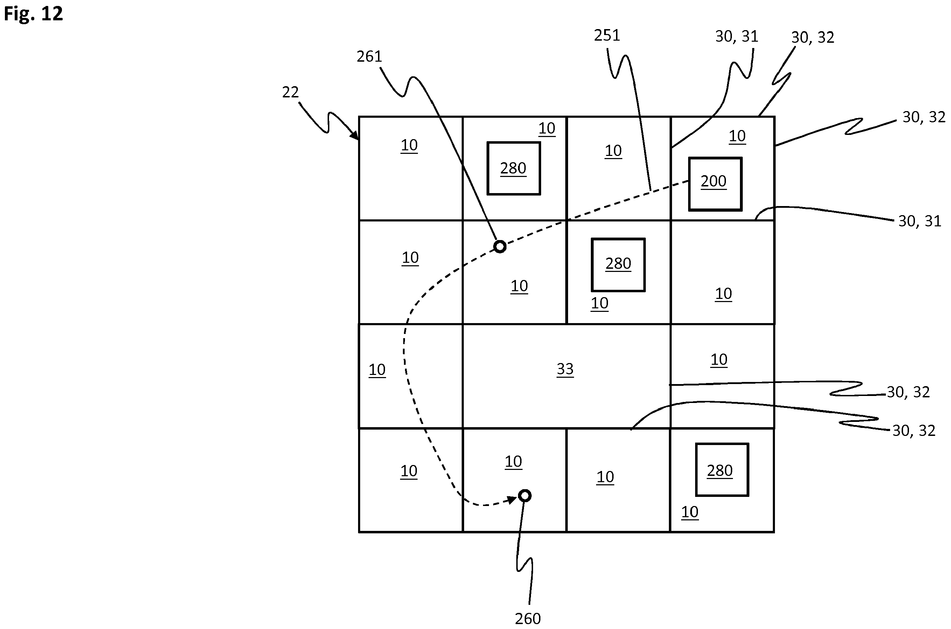

Fig. 12 zeigt eine Antriebsfläche 22 eines Planarantriebssystems in der Draufsicht. Die Antriebsfläche 22 ist aus mehreren Statormodulen 10 zusammengesetzt, wie für Fig. 2 beschrieben. Ein Läufer 200 und drei weitere Läufer 280 sind auf der Antriebsfläche 22 angeordnet, wobei die weiteren Läufer 280 Hindernisse bei der Berechnung eines virtuellen zweidimensionalen Potentialverlaufs für den Läufer 200 analog zu Fig. 7 bilden.

Aufgrund des nicht gezeigten virtuellen zweidimensionalen Potentialverlaufs ergibt sich eine Bewegungsbahn 251 zu einem Zielpunkt 260 analog zu Fig. 7.

Innerhalb der Antriebsfläche 22 ist ein freier Bereich 33 angeordnet. Die Statormodule 10 und durch sie definierte plattenförmige Sektoren weisen jeweils vier Kanten 30 auf. Dabei sind die Kanten 30 entweder Innenkanten 31 oder Außenkanten 32. An den Innenkanten 31 sind weitere plattenförmige Sektoren bzw. Statormodule 10 angeordnet. Die Außenkanten 32 hingegen stellen den Rand der durch die Statormodule 10 bereitgestellten Antriebsfläche 22 dar. Bei der Ermittlung des virtuellen zweidimensionalen Potentialverlaufs wird ein abstoßendes Potential der Außenkanten 32 berücksichtigt. Dadurch kann eine Bewegung des Läufers 200 über den durch die Außenkanten 32 definierten Rand der Antriebsfläche 22 vermieden werden. Die an den freien Bereich 33 angrenzenden Statormodule 10 weisen ebenfalls Außenkanten 32 an dieser Stelle auf, die zu einem abstoßenden Potential führen. Der freie Bereich 33 liegt zwischen dem Läufer 200 und dem Zielpunkt 260. Aufgrund der abstoßenden Potentiale der Außenkanten 32 ist die Bewegungsbahn 251 um den freien Bereich 33 herumgeführt.

Alternativ kann vorgesehen sein, den freien Bereich 33 als Hindernis bei der Berechnung des virtuellen zweidimensionalen Potentialverlaufs zu berücksichtigen.

In einem Ausführungsbeispiel werden Bewegungen der weiteren Läufer 280 auf der Antriebsfläche 22 bei der Ermittlung des virtuellen zweidimensionalen Potentialverlaufs berücksichtigt. Dies kann einerseits dann erfolgen, wenn sich einer oder mehrere der weiteren Läufer 280 ebenfalls bewegen. Beispielsweise kann das erfindungsgemäße Verfahren für alle auf der Antriebsfläche 22 angeordneten Läufer 200, 280 durchgeführt werden.

Es kann vorgesehen sein, dass die in Fig. 12 gezeigte Antriebsfläche 22 nur einen Ausschnitt eines Planarantriebssystems darstellt. Insbesondere können weitere Statormodule 10 an die Antriebsfläche 22 angrenzend angeordnet werden oder sein, wobei dadurch auch Außenkanten 32 zu Innenkanten 31 werden können, wenn an eine bisherige Außenkante 32 angrenzend nun ein zusätzliches Statormodul 10 angeordnet wird.

In einem Ausführungsbeispiel kann ein anziehendes Potential eines Zwischenzielpunkts 261 zwischen dem Läufer 200 und dem Zielpunkt 260 berücksichtigt werden. Ein solcher optionaler Zwischenzielpunkt 261 ist ebenfalls in Fig. 12 dargestellt. Es kann vorgesehen sein, dass das anziehende Potential des Zielpunkts 260 bei der Ermittlung des virtuellen zweidimensionalen Potentialverlaufs erst berücksichtigt wird, wenn der Läufer 200 den Zwischenzielpunkt 261 erreicht. Alternativ können auch anziehende Potentiale sowohl des Zwischenzielpunkts 261 als auch des Zielpunkts 260 bei der Ermittlung des virtuellen zweidimensionalen Potentialverlaufs berücksichtigt werden.

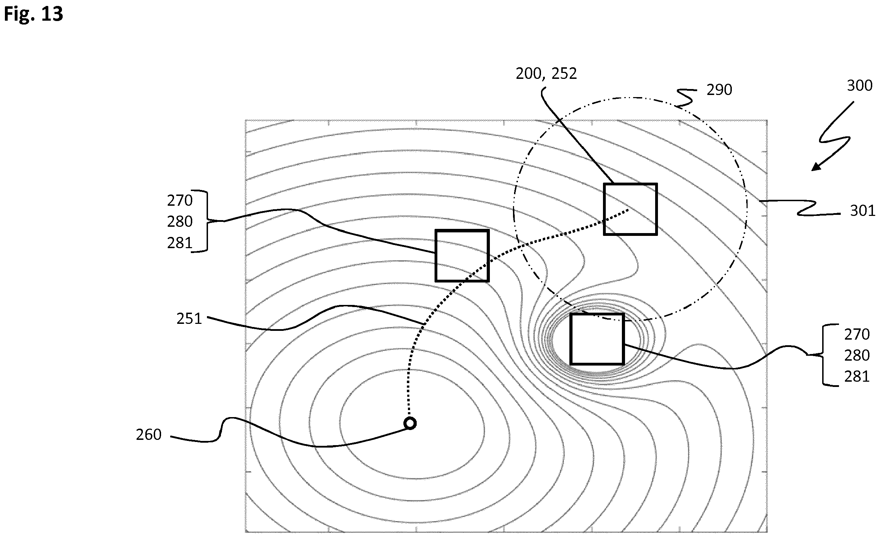

Fig. 13 zeigt einen virtuellen zweidimensionalen Potentialverlauf 300, der dem virtuellen zweidimensionalen Potentialverlauf 300 der Fig. 7 entspricht, sofern im Folgenden keine Unterschiede beschrieben sind. Im Gegensatz zur Fig. 7 bleibt bei der Ermittlung des virtuellen zweidimensionalen Potentialverlauf 300 ein Potential außerhalb eines vorgegebenen Abstands 290 zum Läufer 200 unberücksichtigt. Einer der weiteren Läufer 280 ist teilweise innerhalb des vorgegebenen Abstands 290 angeordnet, weshalb das abstoßende Potential dieses weiteren Läufers 280 bei der Ermittlung des virtuellen zweidimensionalen Potentialverlaufs 300 berücksichtigt wird. Der andere weitere Läufer 280 ist außerhalb des vorgegebenen Abstands 290 angeordnet, weshalb das abstoßende Potential dieses weiteren Läufers 280 bei der Ermittlung des virtuellen zweidimensionalen Potentialverlaufs 300 unberücksichtigt bleibt.

Am virtuellen zweidimensionalen Potentialverlauf 300 der Fig. 13 ist zu erkennen, dass das anziehende Potential des Zielpunkts 260 bei der Ermittlung des virtuellen zweidimensionalen Potentialverlaufs 300 berücksichtigt wird.

Die Bewegungsbahn 251 des Läufers, die sich aus dem virtuellen zweidimensionalen Potentialverlauf 300 wie für Fig. 7 beschrieben ergibt, würde zu einer Kollision mit dem außerhalb des vorgegebenen Abstands 290 angeordneten weiteren Läufer 280 führen.

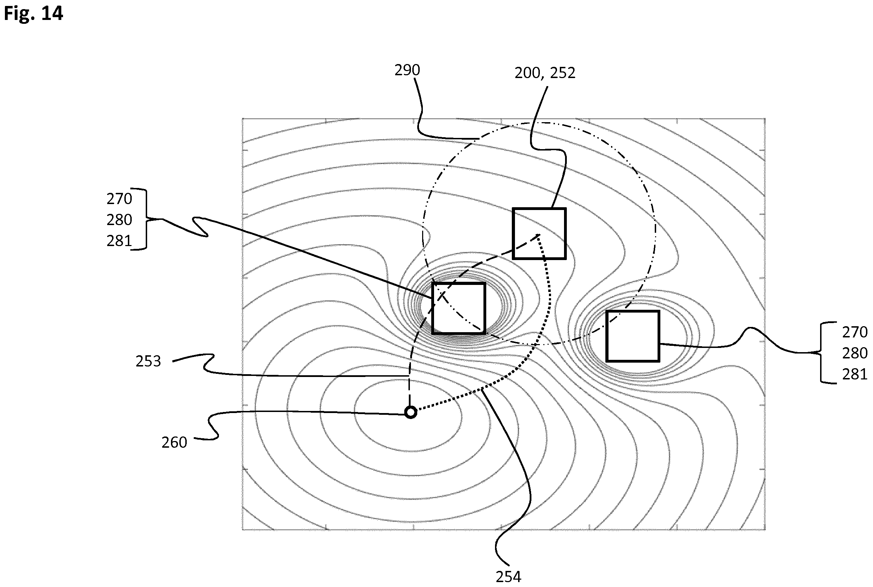

Fig. 14 zeigt einen virtuellen zweidimensionalen Potentialverlauf 300 für den Läufer 200 der Fig. 13, wenn sich dieser ein Stück weit entlang der Bewegungsbahn 251 der Fig. 13 bewegt hat. Nun liegen beide weiteren Läufer 280 innerhalb des vorgegebenen Abstands 290, so dass die abstoßenden Potentiale beider weiterer Läufer 280 bei der Ermittlung des virtuellen zweidimensionalen Potentialverlaufs 300 berücksichtigt werden. Aufgrund des veränderten virtuellen zweidimensionalen Potentialverlaufs 300 ergibt sich nun eine neue Bewegungsbahn 254, die zwischen den weiteren Läufern 280 hindurchführt und Kollisionen mit den weiteren Läufern 280 vermeidet. Eine ursprüngliche Bewegungsbahn 253, die der Bewegungsbahn der Fig. 13 entspricht, würde zu einer Kollision mit einem der weiteren Läufer 280 führen.

Ebenfalls in Fig. 14 ist erkennbar, dass sich der weitere Läufer 280, für den in den Fig. 13 und 14 auf der ursprünglichen Bewegungsbahn 253 eine Kollision stattfinden würde, ebenfalls bewegt hat und dadurch seine weitere zweite Position 281 verändert hat. Auch dies wird bei der Ermittlung des virtuellen zweidimensionalen Potentialverlaufs 300 berücksichtigt.

Das Verfahren wird also nach Erreichen der in Fig. 14 gezeigten Anordnung des Läufers 200 und der weiteren Läufer 280 erneut durchgeführt und die von der Bewegungsbahn 251 der Fig. 13 abweichende neue Bewegungsbahn 254 ermittelt. Dies könnte analog ebenso erfolgen, wenn bereits bei der Ermittlung des virtuellen zweidimensionalen Potentialverlaufs 300 der Fig. 13 die abstoßenden Potentiale aller weiterer Läufer 280 berücksichtigt worden wären, beispielsweise um Bewegungen der weiteren Läufer 280 beim erneuten Durchlaufen des Verfahrens berücksichtigen zu können.

Es kann vorgesehen sein, dass innerhalb des vorgegebenen Abstands 290 ein Zwischenzielpunkt analog zum Zwischenzielpunkt der Fig. 12 angeordnet ist und bei der Ermittlung des virtuellen zweidimensionalen Potentialverlaufs 300 berücksichtigt wird.

Das in den Fig. 7 bis 14 beschriebene Verfahren kann mittels der Steuereinheit 20 der Fig. 1 und 2 durchgeführt werden. Dazu kann die Steuereinheit 20 eine Recheneinheit aufweisen, die die notwendigen Berechnungen durchführt. Zusätzlich kann die Steuereinheit eine Möglichkeit aufweisen, Daten mit den Statormodulen 10 der Fig. 1 und 2 auszutauschen und eine Ansteuerung der Leiterstreifen 125, 126 und damit des Antriebsmagnetfeldes der Statormodule 10 vornehmen.

Ferner ist ein Computerprogramm vorgesehen, welches Befehle umfasst, die bei der Ausführung des Computerprogramms durch einen Computer diesen veranlassen, die Schritte des beschrieben Verfahrens auszuführen. Dieses Computerprogramm kann insbesondere von der Recheneinheit der Steuereinheit 20 ausgeführt werden. Alternativ kann das Computerprogramm von einer anderen Recheneinheit ausgeführt werden und der Steuereinheit 20 nur die Ergebnisse der Berechnung übergeben, wodurch die Steuereinheit 20 in die Lage versetzt wird, die Statormodule 10 entsprechend anzusteuern.

Bezuaszeichenliste

1    Planarantriebssystem
8    Oberseite
9    Unterseite
10   Statormodul
11   Statorfläche
12   erste Richtung
14   zweite Richtung
15   vertikale Richtung
18   Datenanschlussleitung
19   Modulgehäuse
20   Steuereinheit
21   Energieversorgungsleitung
22   Antriebsfläche
30   Kante der Statorfläche
31   Innenkante
32   Außenkante
33   freier Bereich
100  Statoreinheit
104  erste Statorlage
105  zweite Statorlage
106  dritte Statorlage
107  vierte Statorlage
110  erster Statorsektor
112  dritter Statorsektor
113  zweiter Statorsektor

114  vierter Statorsektor
120  erste Statorsegmente
121  zweite Statorsegmente
125  Leiterstreifen
126  weitere Leiterstreifen
127  Magnetfelderzeuger
200  Läufer
201  Magnetanordnung
206  erste Läuferrichtung
208  zweite Läuferrichtung
210  erste Magneteinheit
211  Antriebsmagnet
220  zweite Magneteinheit
221  weiterer Antriebsmagnet
230  dritte Magneteinheit
240  vierte Magneteinheit
250  virtueller Kraftvektor
251  Bewegungsbahn
252  erste Position
253  ursprüngliche Bewegungsbahn
254  neue Bewegungsbahn
260  Zielpunkt
261  Zwischenzielpunkt
270  Hindernis
271  zweite Position
280  weiterer Läufer
281  weitere zweite Position
282  zukünftige weitere zweite Positionen
290  vorgegebener Abstand
300  virtueller zweidimensionaler Potentialverlauf
301  Äquipotentiallinie
321  erste Schnittlinie
322  zweite Schnittlinie
323  dritte Schnittlinie
324  vierte Schnittlinie
325  Ort
326  virtueller Potentialverlauf

**Patentansprüche**

1. Verfahren zum Antreiben wenigstens eines Läufers (200) eines Planarantriebssystems (1), wobei der Läufer (200) wenigstens eine Vorrichtung zum Erzeugen eines Magnetfeldes, insbesondere eine Magnetanordnung (201), aufweist, wobei der Läufer (200) auf einer Antriebsfläche (22) bewegbar ist, wobei die Antriebsfläche (22) mittels Statormodulen (10) gebildet ist, wobei die Statormodule (10) einen Magnetfelderzeuger (127) aufweisen, **gekennzeichnet durch** die folgenden Schritte:

   - Ermittlung eines virtuellen zweidimensionalen Potentialverlaufs (300) für den Läufer (200), wobei ein Zielpunkt (260) des Läufers (200) ein anziehendes Potential innerhalb des virtuellen zweidimensionalen Potentialverlaufs (300) aufweist;

- Ermittlung eines virtuellen Kraftvektors (250) an einer ersten Position (252) des Läufers (200), wobei sich der virtueller Kraftvektor (250) aus dem virtuellen zweidimensionalen Potentialverlauf (300) ergibt, wobei der virtuelle Kraftvektor (250) eine Vektorrichtung und eine Vektorlänge aufweist;
- Steuern des Magnetfelderzeugers (127) zur Erzeugung eines Antriebsmagnetfelds, welches mit dem Magnetfeld des Läufers (200) wechselwirkt, derart, dass durch die Wechselwirkung des Antriebsmagnetfelds mit dem Magnetfeld eine resultierende Kraft auf den Läufer wirkt, wobei eine Richtung der resultierenden Kraft anhand der Vektorrichtung eingestellt wird und wobei eine Stärke der resultierenden Kraft anhand der Vektorlänge eingestellt wird,

wobei mindestens ein Hindernis (270) ein abstoßendes Potential innerhalb des virtuellen zweidimensionalen Potentialverlaufs (300) aufweist, wobei das Hindernis (270) ein weiterer Läufer (280) ist, wobei das Verfahren zusätzlich für den weiteren Läufer (280) ausgeführt wird, wobei das abstoßende Potential der Läufer (200, 280) unterschiedlich ist und der Läufer (200, 280) mit einer höheren Priorität ein höheres Potential aufweist, wobei die höhere Priorität ein Maß dafür ist, welcher Läufer (200, 280) bei der Bewegung der Läufer (200, 280) über die Antriebsfläche (22) bevorzugt in Richtung seines Zielpunkts (260) bewegt werden soll.

2. Verfahren nach Anspruch 1, wobei die erste Position (252) des Läufers mittels Sensoren des Statormoduls (10) ermittelt wird.

3. Verfahren nach Anspruch 1 oder 2, wobei eine zweite Position (271) des Hindernisses (270) mittels Sensoren des Statormoduls (10) ermittelt wird.

4. Verfahren nach einem der Ansprüche 1 bis 3, wobei das abstoßende Potential des Läufers (200) bei der Durchführung des Verfahrens für den weiteren Läufer (280) berücksichtigt wird.

5. Verfahren nach einem der Ansprüche 1 bis 4, wobei nach dem Ablauf einer vorgegebenen Zeitdauer die Verfahrensschritte erneut ausgeführt werden, insbesondere in vorgebbaren Zeitzyklen wiederholt ausgeführt werden.

6. Verfahren nach einem der Ansprüche 1 bis 5, wobei der virtuelle Kraftvektor (250) anhand einer zweidimensionalen Ableitung des virtuellen zweidimensionalen Potentialverlaufs (300) ermittelt wird.

7. Verfahren nach einem der Ansprüche 1 bis 6, wobei die Statormodule (10) jeweils vier Kanten (30) aufweisen, wobei die Kanten (30) entweder Innenkanten (31) oder Außenkanten (32) sind, wobei an Innenkanten (31) weitere Statormodule (10) angrenzen, wobei die Außenkanten (32) ein abstoßendes Potential aufweisen, welches bei der Ermittlung des virtuellen zweidimensionalen Potentialverlaufs (300) berücksichtigt wird.

8. Verfahren nach einem der Ansprüche 1 bis 7, wobei bei der Ermittlung des virtuellen zweidimensionalen Potentialverlaufs (300) ein Potential unberücksichtigt bleibt, das außerhalb eines vorgegebenen Abstands (290) zum Läufer (200) angeordnet ist.

9. Verfahren nach Anspruch 8, wobei ein anziehendes Potential des Zielpunkts (260) auch außerhalb des vorgegebenen Abstands (290) berücksichtigt wird.

10. Verfahren nach Anspruch 9, wobei der Zielpunkt (260) durch einen Zwischenzielpunkt ersetzt wird, wenn der Zielpunkt weiter vom Läufer (200) entfernt ist als der vorgegebene Abstand (290), wobei der Zwischenzielpunkt ein anziehendes Potential aufweist.

11. Verfahren nach einem der Ansprüche 1 bis 10, wobei bei der Ermittlung des virtuellen zweidimensionalen Potentialverlaufs (300) ein virtuelles Ausgleichspotential derart berücksichtigt wird, dass zwischen dem Läufer (200) und dem Zielpunkt (260) keine lokalen Potentialminima auf einer Läuferbahn (251) vorliegen.

12. Verfahren nach einem der Ansprüche 1 bis 11, wobei bei der Ermittlung des virtuellen zweidimensionalen Potentialverlaufs (300) eine Temperatur der Statormodule (10) berücksichtigt wird.

13. Verfahren nach einem der Ansprüche 1 bis 12, wobei eine Bewegung eines weiteren Läufers (280) vorausgesagt wird, und wobei eine zukünftige weitere zweite Position (282) des weiteren Läufers (280) nach der Durchführung der Bewegung ebenfalls bei der Ermittlung des virtuellen zweidimensionalen Potentialverlaufs (300) berücksichtigt wird.

14. Steuereinheit (20), die ausgebildet ist, ein Verfahren nach einem der Ansprüche 1 bis 13 auszuführen.

15. Planarantriebssystem (1) bestehend aus einer Steuereinheit (20) nach Anspruch 14, mehreren Statormodulen (10) und mindestens einem Läufer (200), wobei die Statormodule (10) einen Magnetfelderzeuger (127) zum Erzeugen eines Antriebsmagnetfelds aufweisen.

**Claims**

1. Method for driving at least one rotor (200) of a planar drive system (1), wherein the rotor (200) has at least one device for generating a magnetic field, in particular a magnet assembly (201), wherein the rotor (200) can be moved on a drive surface (22), wherein the drive surface (22) is formed by means of stator modules (10), wherein the stator modules (10) have a magnetic field generator (127), **characterized by** the following steps:

> - determining a virtual two-dimensional potential curve (300) for the rotor (200), wherein a target point (260) of the rotor (200) has an attractive potential within the virtual two-dimensional potential curve (300);
> - determining a virtual force vector (250) at a first position (252) of the rotor (200), wherein the virtual force vector (250) results from the virtual two-dimensional potential curve (300), wherein the virtual force vector (250) has a vector direction and a vector length;
> - controlling the magnetic field generator (127) to generate a drive magnetic field, which interacts with the magnetic field of the rotor (200) in such a way that, as a result of the interaction of the drive magnetic field with the magnetic field, a resultant force acts on the rotor, wherein a direction of the resultant force is set by using the vector direction and wherein a strength of the resultant force is set by using the vector length,

wherein at least one obstacle (270) has a repulsive potential within the virtual two-dimensional potential curve (300), wherein the obstacle (270) is a further rotor (280), wherein the method is additionally carried out for the further rotor (280), wherein the repulsive potential of the rotors (200, 280) is different and the rotor (200, 280) having a higher priority has a higher potential, wherein the higher priority indicates which rotor (200, 280) is preferably to be moved in the direction of its target point (260) during the movement of the rotors (200, 280) over the drive surface (22).

2. Method according to Claim 1, wherein the first position (252) of the rotor is determined by means of sensors of the stator module (10).

3. Method according to Claim 1 or 2, wherein a second position (271) of the obstacle (270) is determined by means of sensors of the stator module (10).

4. Method according to one of Claims 1 to 3, wherein the repulsive potential of the rotor (200) is taken into account when carrying out the method for the further rotor (280).

5. Method according to one of Claims 1 to 4, wherein the method steps are carried out again following the expiry of a predefined time period, in particular are carried out repeatedly in predefinable time cycles.

6. Method according to one of Claims 1 to 5, wherein the virtual force vector (250) is determined by using a two-dimensional derivative of the virtual two-dimensional potential curve (300).

7. Method according to one of Claims 1 to 6, wherein the stator modules (10) each have four edges (30), wherein the edges (30) are either inner edges (31) or outer edges (32), wherein further stator modules (10) are adjacent to inner edges (31), wherein the outer edges (32) have a repulsive potential, which is taken into account when determining the virtual two-dimensional potential curve (300).

8. Method according to one of Claims 1 to 7, wherein a potential which is arranged outside a predefined distance (290) from the rotor (200) is disregarded when determining the virtual two-dimensional potential curve (300) .

9. Method according to Claim 8, wherein an attractive potential of the target point (260) is also taken into account outside the predefined distance (290).

10. Method according to Claim 9, wherein the target point (260) is replaced by an intermediate target point when the target point is further removed from the rotor (200) than the predefined distance (290), wherein the intermediate target point has an attractive potential

11. Method according to one of Claims 1 to 10, wherein a virtual compensation potential is taken into account when determining the virtual two-dimensional potential curve (300), in such a way that no local potential minima are present on a rotor path (251) between the rotor (200) and the target point (260).

12. Method according to one of Claims 1 to 11, wherein a temperature of the stator modules (10) is taken into account when determining the virtual two-dimensional potential curve (300).

13. Method according to one of Claims 1 to 12, wherein a movement of a further rotor (280) is predicted, and wherein a future further second position (282) of the further rotor (280) after the movement has been carried out is likewise taken into account when determining the virtual two-dimensional potential curve (300).

14. Control unit (20) which is designed to carry out a method according to one of Claims 1 to 13.

**15.** Planar drive system (1) comprising a control unit (20) according to Claim 14, a plurality of stator modules (10) and at least one rotor (200), wherein the stator modules (10) have a magnetic field generator (127) for generating a drive magnetic field.

## Revendications

**1.** Procédé permettant d'entraîner au moins un rotor (200) d'un système d'entraînement planaire (1), dans lequel le rotor (200) présente au moins un dispositif permettant de générer un champ magnétique, en particulier un agencement magnétique (201), le rotor (200) pouvant être déplacé sur une surface d'entraînement (22), la surface d'entraînement (22) étant formée au moyen de modules de stator (10), les modules de stator (10) présentant un générateur de champ magnétique (127), **caractérisé par** les étapes suivantes consistant à :

- déterminer une courbe de potentiel bidimensionnelle virtuelle (300) pour le rotor (200), un point cible (260) du rotor (200) présentant un potentiel attractif à l'intérieur de la courbe de potentiel bidimensionnelle virtuelle (300) ;
- déterminer un vecteur de force virtuel (250) dans une première position (252) du rotor (200), le vecteur de force virtuel (250) résultant de la courbe de potentiel bidimensionnelle virtuelle (300), le vecteur de force virtuel (250) présentant une direction de vecteur et une longueur de vecteur ;
- commander le générateur de champ magnétique (127) pour générer un champ magnétique d'entraînement qui interagit avec le champ magnétique du rotor (200) de telle sorte que suite à l'interaction du champ magnétique d'entraînement avec le champ magnétique, une force résultante agit sur le rotor, une direction de la force résultante étant réglée à l'aide de la direction de vecteur, et une intensité de la force résultante étant réglée à l'aide de la longueur de vecteur,

au moins un obstacle (270) présentant un potentiel répulsif à l'intérieur de la courbe de potentiel bidimensionnelle virtuelle (300), l'obstacle (270) étant un rotor supplémentaire (280), le procédé étant en outre effectué pour le rotor supplémentaire (280), le potentiel répulsif des rotors (200, 280) étant différent, et le rotor (200, 280) ayant une priorité plus élevée présentant un potentiel plus élevé, la priorité plus élevée étant une mesure pour savoir quel rotor (200, 280) doit être déplacé de préférence lors du déplacement du rotor (200, 280) sur la surface d'entraînement (22) en direction de son point cible (260) .

**2.** Procédé selon la revendication 1, dans lequel la première position (252) du rotor est déterminée au moyen de capteurs du module de stator (10).

**3.** Procédé selon la revendication 1 ou 2, dans lequel une deuxième position (271) de l'obstacle (270) est déterminée au moyen de capteurs du module de stator (10) .

**4.** Procédé selon l'une quelconque des revendications 1 à 3, dans lequel le potentiel répulsif du rotor (200) est pris en compte lors de l'exécution du procédé pour le rotor supplémentaire (280).

**5.** Procédé selon l'une quelconque des revendications 1 à 4, dans lequel, après expiration d'une durée prédéfinie, les étapes de procédé sont exécutées à nouveau, en particulier exécutées à plusieurs reprises dans des cycles de temps prédéfinissables.

**6.** Procédé selon l'une quelconque des revendications 1 à 5, dans lequel le vecteur de force virtuel (250) est déterminé à l'aide d'une dérivée bidimensionnelle de la courbe de potentiel bidimensionnelle virtuelle (300) .

**7.** Procédé selon l'une quelconque des revendications 1 à 6, dans lequel les modules de stator (10) présentent respectivement quatre arêtes (30), les arêtes (30) étant soit des arêtes intérieures (31), soit des arêtes extérieures (32), des modules de stator supplémentaires (10) étant adjacents aux arêtes intérieures (31), les arêtes extérieures (32) présentant un potentiel répulsif qui est pris en compte lors de la détermination de la courbe de potentiel bidimensionnelle virtuelle (300).

**8.** Procédé selon l'une quelconque des revendications 1 à 7, dans lequel, lors de la détermination de la courbe de potentiel bidimensionnelle virtuelle (300), un potentiel qui se trouve au-delà d'une distance prédéfinie (290) par rapport au rotor (200) n'est pas pris en compte.

**9.** Procédé selon la revendication 8, dans lequel un potentiel attractif du point cible (260) est pris en compte même au-delà de la distance prédéfinie (290).

**10.** Procédé selon la revendication 9, dans lequel le point cible (260) est remplacé par un point cible intermédiaire si le point cible est plus éloigné du rotor (200) que la distance prédéfinie (290), le point cible intermédiaire présentant un potentiel attractif.

**11.** Procédé selon l'une quelconque des revendications 1 à 10, dans lequel, lors de la détermination de la courbe de potentiel bidimensionnelle virtuelle (300), un potentiel de compensation virtuel est pris en compte de telle sorte qu'entre le rotor (200) et le point cible (260), il n'y a pas de minima de potentiel locaux sur une trajectoire de rotor (251).

12. Procédé selon l'une quelconque des revendications 1 à 11, dans lequel une température des modules de stator (10) est prise en compte lors de la détermination de la courbe de potentiel bidimensionnelles virtuelle (300).

13. Procédé selon l'une quelconque des revendications 1 à 12, dans lequel un déplacement d'un rotor supplémentaire (280) est prédit, et dans lequel, après l'exécution du déplacement, une deuxième position supplémentaire future (282) du rotor supplémentaire (280) est également prise en compte lors de la détermination de la courbe de potentiel bidimensionnelle virtuelle (300).

14. Unité de commande (20) qui est réalisée pour exécuter un procédé selon l'une quelconque des revendications 1 à 13.

15. Système d'entraînement planaire (1) composé d'une unité de commande (20) selon la revendication 14, de plusieurs modules de stator (10) et d'au moins un rotor (200), les modules de stator (10) présentant un générateur de champ magnétique (127) pour générer un champ magnétique d'entraînement.

EP 3 871 325 B1

**Fig. 1**

**Fig. 2**

Fig. 3

**Fig. 4**

EP 3 871 325 B1

Fig. 5

**Fig. 6**

Fig. 7

**Fig. 8**

**Fig. 9**

Fig. 10

**Fig. 11**

Fig. 12

Fig. 13

**Fig. 14**

EP 3 871 325 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3095739 A1
- WO 2013059934 A1
- WO 2015017933 A1
- WO 2015179962 A1
- WO 2015184553 A1
- WO 2015188281 A1
- WO 2017004716 A1
- DE 102017131304 A1
- DE 102017131314 A1
- DE 102017131321 A1

**In der Beschreibung aufgeführte Nicht-Patentliteratur**

- Modified artificial potential field method for online path planning applications. **BOUNINI FARID et al.** 2017 IEEE INTELLIGENT VEHICLES SYMPOSIUM (IV). IEEE, 11. Juni 2017, 180-185
- MULTIPLE ROBOT PATH COORDINATION USING ARTIFICIAL POTENTIAL FIELDS. PROCEEDINGS OF THE INTERNATIONAL CONFERENCE ON ROBOTICS AND AUTOMATION. CINCINNATI. 13. Mai 1990
- PROCEEDINGS OF THE INTERNATIONAL CONFERENCE ON ROBOTICS AND AUTOMATION. IEEE COMP. SOC.PRESS, 13. Mai 1990, 500-505
- Local Autonomous Robot Navigation Using Potential Fields. **MIGUEL A ; PADILLA CASTANEDA et al.** Motion Planning. InTech, 01. Juni 2008